# EUROPÄISCHE PATENTSCHRIFT

(11) **EP 3 645 260 B1**
(45) Veröffentlichungstag und Bekanntmachung des Hinweises auf die Patenterteilung: **01.11.2023**
(21) Anmeldenummer: 18735309.9
(22) Anmeldetag: 29.06.2018
(51) Int. Cl.: B30B 11/02, B30B 15/06, B22F 3/03

(54) **EBENENPLATTE EINES PRESSENWERKZEUGS**
LEVEL PLATE OF A PRESSING TOOL
PLAQUE DE NIVEAU D'UN OUTIL DE PRESSE

(30) Priorität: 29.06.2017 DE 102017114458
(43) Veröffentlichungstag der Anmeldung: 06.05.2020
(73) Patentinhaber: GKN Sinter Metals Engineering GmbH, 42477 Radevormwald (DE)
(72) Erfinder: SCHMITT, Rainer, 53343 Wachtberg (DE); TEKINES, Hasim, 53343 Wachtberg (DE); MAASSEN, Robert, 58455 Witten (DE)
(74) Vertreter: Rössler, Matthias
(86) Internationale Anmeldenummer: PCT/EP2018/067690
(87) Internationale Veröffentlichungsnummer: WO 2019/002600

(56) Entgegenhaltungen:
- CN-U- 201 516 699
- DE-A1-102010 008 986
- DE-A1-102015 201 784
- DE-A1-102015 201 966
- US-A- 5 498 147
- US-A1- 2017 087 638

## Beschreibung

Die Erfindung betrifft eine Ebenenplatte für ein Pressenwerkzeug einer Presse, insbesondere einer Pulverpresse zur Herstellung von Grünlingen. Die Erfindung betrifft weiter eine Verwendung einer Ebenenplatte in einem Pressenwerkzeug einer Presse zur Herstellung eines Grünlings. Mit der Presse werden insbesondere sinterfähige Grünlinge hergestellt, also Grünlinge, die nach dem Pressvorgang gesintert werden können. Insbesondere können in der Presse metallische und/oder keramische Pulver zu Grünlingen verpresst werden.

Bekannte Pressen dieser Art umfassen zumindest eine Matrize, ein einen oder mehrere Oberstempel umfassendes oberes Pressenwerkzeug und ein einen oder mehrere Unterstempel umfassendes unteres Pressenwerkzeug. Eine Innenumfangsfläche der Matrize bildet die Aufnahme für das Pulver bzw. den herzustellenden Grünling. Über eine nach oben offene erste Stirnseite der Matrize kann insbesondere mindestens ein Oberstempel des oberen Pressenwerkzeugs entlang einer axialen Richtung in die Matrize hineinfahren. Der mindestens eine Oberstempel gleitet dabei entlang der Innenumfangsfläche der Matrize und verpresst das Pulver zunehmend. Insbesondere kann zusätzlich mindestens ein Unterstempel vorgesehen sein, der über eine nach unten offene zweite Stirnseite der Matrize entlang der axialen Richtung in die Matrize hineinfährt, bzw. in der Matrize zwischen einer oberen Stellung und einer unteren Stellung verfährt. Zwischen dem mindestens einen Oberstempel und dem mindestens einen Unterstempel wird so das Pulver zu einem Grünling verpresst, wobei die Innenumfangsfläche der Matrize insbesondere eine seitliche Kontur des Grünlings definiert.

Insbesondere umfasst ein oder jedes Pressenwerkzeug eine Mehrzahl von Stempeln, wobei zumindest ein Stempel gegenüber dem mindestens einen weiteren Stempel entlang der axialen Richtung zum Verpressen des Pulvers verfahrbar ist. Jeder Stempel (und jede mit diesem Stempel zur Übertragung der Presskraft verbundene Komponente des Pressenwerkzeugs) kann dabei einer Werkzeugebene zugeordnet werden. Zum Verfahren jedes (verfahrbaren) Stempels ist regelmäßig eine Ebenenplatte (auch Werkzeugebenenplatte genannt) vorgesehen, die durch mindestens einen Hubzylinder betätigt und/oder durch den Hubzylinder entlang der axialen Richtung verfahren wird. Die Ebenenplatte kann durch mindestens eine Führungssäule geführt sein, die sich entlang der axialen Richtung erstreckt. Über die mindestens eine Führungssäule wird eine Verdrehung der Ebenenplatte in einer Umfangsrichtung und/oder eine Verkippung der Ebenenplatte um eine entlang einer radialen Richtung verlaufende Achse verringert bzw. verhindert. Die verschiedenen Ebenenplatten zumindest eines oberen oder eines unteren Presswerkzeugs können durch Führungssäulen gemeinsam geführt werden.

Zwischen der Ebenenplatte und dem mindestens einen Stempel, der das Pulver in der Matrize kontaktiert, kann zusätzlich ein Stempelhalter angeordnet sein, der eine von den Ebenenplatten übertragene Presskraft auf den mindestens einen Stempel überträgt. Weiter können Druckplatten zwischen Stempel bzw. Stempelhalter und Ebenenplatte vorgesehen sein, die eine Presskraft der Ebenenplatte in der axialen Richtung und in der radialen Richtung hin zu den Stempeln übertragen. Stempel bzw. Stempelhalter können über Klemmplatten (alternativ), Bajonett-Verschlüsse oder schalenförmige Aufnahmen an der Druckplatte oder an der Ebenenplatte befestigt sein.

Bei bekannten Pressenwerkzeugen bzw. Pressen sind die einzelnen Ebenenplatten, die durch eine Führung durch mindestens eine Führungssäule und eine Anbindung an den mindestens einen Hubzylinder charakterisiert sind, in der axialen Richtung voneinander beabstandet und übereinander angeordnet, d. h. sie sind dauerhaft auf verschiedenen Höhen (Niveaus) entlang der axialen Richtung angeordnet. Eine Ebenenplatte kann dabei kubisch, quaderförmig oder. scheibenförmig ausgeführt sein. Die Ebenenplatte erstreckt sich zwischen einer zentral angeordneten Aufnahme für die Druckplatte, den Stempelhalter oder den Stempel entlang der radialen Richtung zumindest bis zu einer zylindrischen Führungsfläche, die zur Kontaktierung einer der Führungssäulen vorgesehen ist.

Eine Presse ist z. B. aus der US 5,498,147 bekannt. Die dort dargestellten Ebenenplatten sind im Querschnitt rechteckig geformt und weisen eine konstante Wandstärke auf. Die Ebenenplatte ist in Teilbereichen durchbrochen, so dass ein Druckkolben des Hubzylinders bzw. eine Druckplatte zur Verbindung mit dem Stempel an der Ebenenplatte aufgenommen werden kann. Dabei liegen die Querschnittsänderungen aber nicht im Bereich zwischen den Führungsflächen an den Führungssäulen und der zentralen Aufnahme für die Druckplatte und auch nicht kontinuierlich entlang einer Erstreckung vor sondern sind nur an jeweils einer Position vorgesehen, nämlich an der Aufnahme für die Druckplatte, wobei die Querschnittsänderungen regelmäßig durch parallel zur axialen Richtung verlaufende Seitenwände gebildet werden.

Der Aufbau einer bekannten Presse bzw. eines Pressenwerkzeugs weist eine große Bauhöhe in der axialen Richtung auf. Dabei erstrecken sich ausgehend von der Matrize für jede Werkzeugebene die einzelnen Komponenten der betreffenden Werkzeugebene (also Stempel, ggf. zugehöriger Stempelhalter, ggf. zugehörige Druckplatte) entlang der axialen Richtung unterschiedlich weit, so dass unterschiedliche Elastizitäten für jede Werkzeugebene vorliegen. Die Elastizität der Werkzeugebene bezeichnet insbesondere die Verformung der Komponenten der Werkzeugebene in der axialen Richtung infolge einer durch die Hubzylinder auf die Anbindung bzw. durch den Stempel oder Stempelhalter auf die Aufnahme einwirkenden Presskraft. Die Einheit der Elastizität ist: m/N [Meter/Newton]. Infolge der unterschiedlichen Elastizitäten kann gerade ein Entformen des herzustellenden Grünlings durch die unterschiedliche Ausdehnung der Komponenten zwischen verschiedenen Werkzeugebenen bei der Entspannung der Werkzeugebenen (Presskraft wird zurückgefahren) problematisch sein, wobei Rissbildungen in dem Grünling auftreten können.

Die DE 10 2015 201 966 A1 ist auf kegelige Stempel gerichtet.

Die US 2017/087638 A1 ist auf kegelige Stempel gerichtet, wobei die Stempel auf zylindrischen Stempelhaltern angeordnet sind.

Die DE 10 2015 201 784 A1 ist auf zweiteilige, kegelige Stempel gerichtet.

Die CN 201 516 699 U sowie die DE10 2010 008986 A1 zeigen Ebenenplatten gemäß des Oberbegriffs des Anspruchs 1 sowie eine Verwendung einer solchen Ebenenenplatte.

Hiervon ausgehend ist es Aufgabe der vorliegenden Erfindung, die mit Bezug auf den Stand der Technik geschilderten Probleme zumindest teilweise zu lindern oder gar zu lösen. Insbesondere sollen die Unterschiede in den Elastizitäten zumindest verringert werden, wobei die Pressenwerkzeuge zudem mit einer geringeren Bauhöhe herstellbar bzw. bereitstellbar sind. Weiter soll nach Möglichkeit das Gewicht zumindest der Ebenenplatten reduziert werden. Damit kann die Montage der Presse bzw. der Ebenenplatte vereinfacht und ggf. auch schneller durchgeführt werden. Insbesondere können so auch kompaktere Pressen mit geringerer Bauhöhe eingesetzt werden, so dass auch hier Material und Kosten eingespart werden können. Weiter soll eine Verformung der Ebenenplatte, gerade im Bereich der Aufnahme, im Betrieb der Ebenenplatte zumindest verringert werden.

Zur Lösung dieser Aufgabe wird eine Ebenenplatte gemäß den Merkmalen des Patentanspruchs 1 und eine Verwendung von Ebenenplatten gemäß Patentanspruch 12 vorgeschlagen. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Hierzu trägt eine Ebenenplatte für ein Pressenwerkzeug einer Presse bei, insbesondere einer Pulverpresse zur Herstellung von Grünlingen. Mit der Presse werden insbesondere sinterfähige Grünlinge hergestellt, also Grünlinge, die nach dem Pressvorgang gesintert werden können. Insbesondere können in der Presse metallische und/oder keramische Pulver zu Grünlingen verpresst werden.

Insbesondere kann die Ebenenplatte einteilig ausgeführt sein.

Die Ebenenplatte kann über mindestens einen Hubzylinder entlang einer axialen Richtung zur Betätigung eines Stempels der Presse verfahren werden. Die Ebenenplatte weist eine Anbindung für den mindestens einen Hubzylinder, mindestens eine zur axialen Richtung parallele zumindest teilweise zylindrische Führungsfläche zur Kontaktierung einer Führungssäule und eine zentral angeordnete Aufnahme zur Kontaktierung des Stempels oder des Stempelhalters der Presse auf. Die Ebenenplatte weist in zumindest einem ersten Querschnitt, der parallel zur axialen Richtung und entlang einer zur axialen Richtung senkrecht verlaufenden radialen Richtung durch die Anbindung und die Aufnahme verläuft, zumindest einen ersten Bereich zwischen der Anbindung und der Aufnahme mit einer Das Minimum kann als Öffnung ausgebildet sein, die eine in eine erste axiale Richtung weisende Oberseite und eine in eine der ersten axialen Richtung entgegengesetzte zweite axiale Richtung weisende Unterseite der Ebenenplatte miteinander verbindet.

Erfindungsgemäß ändert sich die Wandstärke in dem ersten Bereich, zumindest zwischen der Aufnahme und dem Minimum, kontinuierlich. Das Minimum stellt eine lokale Schwächung der Ebenenplatte dar. Das Minimum und/oder die sich ändernde Wandstärke dienen der gezielten und gesteuerten Übertragung der in der Presse im Betrieb wirkenden Presskräfte. Diese Presskräfte wirken auf die Ebenenplatte einerseits zumindest über die Aufnahme (ausgehend von dem Stempel bzw. Stempelhalter) und andererseits zumindest über die Anbindungen (ausgehend von den Hubzylindern) ein.

Über das mindestens eine Minimum und/oder die sich ändernde Wandstärke wird ausgehend von der Anbindung insbesondere eine über die gesamte Aufnahme gleichmäßig verteilte Kraftweiterleitung hin zum Stempelhalter bzw. zum Stempel gewährleistet.

Insbesondere wird über das mindestens eine Minimum und/oder die sich ändernde Wandstärke sichergestellt, dass im Betrieb der Presse auch bei Beaufschlagung der Ebenenplatte mit der nominellen Presskraft, eine Verformung der Aufnahme vermindert wird und die Verformung dabei so gleichmäßig wie möglich erfolgt.

Die Aufnahme weist im unbelasteten Zustand der Ebenenplatte (Einbausituation der Ebenenplatte in der Presse bzw. im Adapter bzw. im Adapterunterteil- oder oberteil; keine Einleitung einer Presskraft) eine Formlinie auf. Diese Formlinie hat gegenüber der axialen Richtung und gegenüber der radialen Richtung eine definierte Lage bzw. Position. Die Formlinie beschreibt insbesondere die geometrische Gestalt der Aufnahme. Die Formlinie kann mittels Formtoleranzen beschrieben werden, wie z. B. der Geradheit, der Ebenheit, der Rundheit, der Zylinderform oder dergleichen. Die Formlinie kann sich in der Umfangsrichtung umlaufend erstrecken und beschreibt die Form der Aufnahme. Die Formlinie kann insbesondere eine virtuelle Linie sein, die sich z. B. entlang einer Auflagefläche der Aufnahme für den Stempel bzw. Stempelhalter erstreckt. Die Formlinie kann auch ein innerer Rand der Aufnahme sein.

Die hier betrachtete (nominelle) Presskraft, bei der die Formlinienverformung zu betrachten ist, beträgt insbesondere zwischen 1.000 und 120.000 kN [kiloNewton], bevorzugt zwischen 10.000 und 100.000 kN. Die Presskraft ist (gleichmäßig) über die vorgesehene(n) Anbindung(en) in die Ebenenplatte einzuleiten und die Formlinienverformung zu bewerten.

Das mindestens eine Minimum und/oder die sich ändernde Wandstärke gewährleisten insbesondere, dass bei der Aufnahme, bei Beaufschlagung der Ebenenplatte mit der Presskraft, eine Abweichung von der Formlinie in der radialen Richtung höchstens 0,05 Millimeter, insbesondere höchstens 0,02 Millimeter beträgt.

Insbesondere ist der Abschnitt zwischen der mindestens einen Anbindung und der zentralen Aufnahme bezüglich der Wandstärke so eingerichtet, dass bei Einleitung der Presskraft über die mindestens eine Anbindung die (ohne Presskraft vorliegende) Formlinie der Aufnahme sich nur geringfügt verformt. Das mindestens eine Minimum und/oder die sich ändernde Wandstärke gewährleisten insbesondere, dass bei der Aufnahme, bei Beaufschlagung der Ebenenplatte mit der Presskraft, eine relative Abweichung von der Formlinie (also eine unterschiedliche Verformung der Aufnahme bzw. der Formlinie) in der axialen Richtung höchstens 0,05 Millimeter, insbesondere höchstens 0,02 Millimeter beträgt. Eine Verlagerung der Aufnahme (also der Formlinie der Aufnahme) entlang der axialen Richtung ist dabei insbesondere zulässig. Allerdings wird eine unterschiedliche Verlagerung, also eine Verformung der Formlinie der Aufnahme, zumindest weitgehend verhindert. Insbesondere ist hierunter zu verstehen, dass die Formlinie der Aufnahme ohne Presskraft und mit Presskraft (fast) deckungsgleich bleibt, insbesondere bei einer Betrachtung seitens des Stempels her.

Es können mehrere Hubzylinder zum Verfahren der Ebenenplatte eingesetzt werden, wobei die Ebenenplatte dann jeweils eine Anbindung für jeden Hubzylinder aufweist. Der mindestens eine Hubzylinder kann so gegenüber der Ebenenplatte angeordnet sein, dass die Ebenenplatte durch ein möglichst geringes Drehmoment um eine zur radialen Richtung parallelen Achse, das ein Verkippen der Ebenenplatte um diese Achse bewirken könnte, beaufschlagt wird. Insbesondere sind also z. B. zwei Hubzylinder vorgesehen, die entlang der Umfangsrichtung um 180 Winkelgrad zueinander versetzt angeordnet sind.

Die Ebenenplatte kann eine Mehrzahl von (bevorzugt vier) zumindest teilweise zylindrischen Führungsflächen aufweisen, die in einer Richtung senkrecht zur axialen Richtung voneinander beabstandet angeordnet sind. Über die mindestens eine Führungsfläche kann die Ebenenplatte entlang der axialen Richtung durch die mindestens eine Führungssäule geführt werden, die sich entlang der axialen Richtung erstreckt. Über die mindestens eine Führungssäule wird eine Verdrehung der Ebenenplatte in einer Umfangsrichtung und/oder eine Verkippung der Ebenenplatte um eine entlang einer radialen Richtung verlaufende Achse verringert bzw. verhindert. Die Ebenenplatten zumindest eines oberen oder unteren Pressenwerkzeugs können durch gemeinsame Führungssäulen geführt sein.

Die Aufnahme zur Kontaktierung des Stempels oder eines Stempelhalters der Presse ist insbesondere zentral angeordnet, d. h. (etwa) in einer Mitte der Ebenenplatte, wenn diese entlang der axialen Richtung betrachtet wird. Eine zentrale Anordnung der Aufnahme liegt insbesondere dann vor, wenn diese zentral zwischen bzw. mit gleichem Abstand zu mehreren Anbindungen positioniert ist, also insbesondere mittig bezüglich der Krafteinleitungspunkte der Hubzylinder. Die Aufnahme kann (mittig) zwischen einer Mehrzahl von Hubzylindern und einer Mehrzahl von Führungssäulen angeordnet sein, so dass die Ebenenplatte bei einer Beaufschlagung der Ebenenplatte mit einer Presskraft durch ein möglichst geringes Drehmoment um eine zur radialen Richtung parallelen Achse, das ein Verkippen der Ebenenplatte um diese Achse bewirken könnte, beaufschlagt wird.

Die Aufnahme kann rund, bevorzugt kreisrund, ausgeführt sein. Die Aufnahme kann eine parallel zur axialen Richtung verlaufende und/oder zur Aufnahme konzentrisch angeordnete Längsachse aufweisen. Die radiale Richtung erstreckt sich senkrecht zur axialen Richtung und insbesondere jeweils ausgehend von der Längsachse.

Die Aufnahme kann eine Aufnahmefläche zur Kontaktierung und/oder zur Abstützung des Stempels bzw. Stempelhalters aufweisen. Der Stempel bzw. der Stempelhalter kann über eine Klemmplatte, eine Verschraubung, einen Bajonettverschluss oder ähnliches an der Aufnahme befestigt werden.

Die Ebenenplatte kann in dem ersten Bereich in dem ersten Querschnitt eine erste Mittellinie der Wandstärke aufweisen, wobei die erste Mittellinie unter einem ersten Winkel von mindestens 10 Winkelgrad zur radialen Richtung verläuft.

Der erste Bereich erstreckt sich in der radialen Richtung insbesondere über eine erste Erstreckung. In dem ersten Bereich verläuft die erste Mittellinie unter einem ersten Winkel von mindestens 10 Winkelgrad, insbesondere mindestens 20, bevorzugt mindestens 45 zur radialen Richtung. Insbesondere verläuft die erste Mittellinie unter einem ersten Winkel von höchstens 85 Winkelgrad, bevorzugt höchstens 80 Winkelgrad.

Die Wandstärke bezeichnet die Materialstärke der Ebenenplatte parallel zur axialen Richtung. Die Mittellinie verläuft durch die geometrischen Flächenschwerpunkte der in dem ersten Querschnitt liegenden Schnittflächen der Ebenenplatte. Die erste Mittellinie kann durch die Mittelpunkte der an der jeweiligen radialen Position vorliegenden Wandstärke definiert sein.

Diese Wandstärke ändert sich kontinuierlich, wenn z. B. an jeder zueinander benachbarten Position entlang der radialen Richtung im ersten Bereich eine jeweils andere Wandstärke vorliegt. Dabei ist insbesondere keine sprunghafte Änderung der Wandstärke gemeint, wie sie z. B. durch eine Bohrung oder ähnliches gebildet ist.

Die Änderung der Wandstärke kann als eine kontinuierliche Reduzierung und/oder kontinuierliche Vergrößerung ausgebildet sein. Es kann vorgesehen sein, das in dem ersten Bereich eine konkrete Wandstärke an weniger als fünf Positionen in radialer Richtung vorliegt, insbesondere nur an maximal drei, zwei oder einer Position. Die Positionen sind dabei in radialer Richtung maximal 0,5 mm oder sogar 0,1 mm voneinander beabstandet.

In der axialen Richtung weisen bekannte Ebenenplatten eine im Wesentlichen konstante Wandstärke auf. In einem Querschnitt, der parallel zur axialen Richtung und entlang einer zur axialen Richtung senkrecht verlaufenden radialen Richtung durch die Aufnahme und die Anbindung verläuft, sind die Ebenenplatten insbesondere rechteckig mit im Wesentlichen konstanter Wandstärke ausgeführt, wobei sich eine Oberseite der Ebenenplatte und eine Unterseite der Ebenenplatte und damit auch eine Mittellinie der Wandstärke parallel zur radialen Richtung erstrecken. Die in der US 5,498,147 dargestellten Ebenenplatten sind im Querschnitt rechteckig geformt und weisen eine konstante Wandstärke auf. Die Ebenenplatte ist in Teilbereichen durchbrochen, so dass ein Druckkolben des Hubzylinders bzw. eine Druckplatte zur Verbindung mit dem Stempel an der Ebenenplatte aufgenommen werden kann. Dabei liegen die Querschnittsänderungen bzw. Änderungen der Wandstärke aber nicht im Bereich zwischen der Anbindung für den Hubzylinder und der zentralen Aufnahme für die Druckplatte vor sondern sind nur an jeweils einer Position vorgesehen, nämlich an der Aufnahme für die Druckplatte, wobei die Querschnittsänderungen regelmäßig durch parallel zur axialen Richtung verlaufende Seitenwände gebildet werden. Vorliegend wird nun von dieser bekannten Lehre abgewichen.

Der erste Bereich kann sich in der radialen Richtung über eine erste Erstreckung erstrecken, die mindestens 10 %, insbesondere mindestens 20 %, bevorzugt 30 %, eines kleinsten Abstandes zwischen der zentralen Aufnahme und der Anbindung in dem ersten Querschnitt entlang der radialen Richtung beträgt. Die erste Erstreckung kann mindestens 5 Millimeter, mindestens 10 Millimeter oder mindestens 20 Millimeter betragen.

Die Aufnahme kann eine Aufnahmefläche oder einen Funktionsbereich (im Folgenden auch als Teile der Aufnahme bezeichnet) an der Ebenenplatte umfassen, an dem der Stempel oder ein Stempelhalter anordenbar ist. Der kleinste Abstand kann zwischen der Anbindung und einem, der Anbindung entlang der radialen Richtung am nächsten angeordneten Teil der Aufnahme ermittelt werden.

Der erste Bereich ist insbesondere in einem Abstand von mindestens 5 % des kleinsten Abstands von der Anbindung und/oder von der Aufnahme angeordnet. Der kleinste Abstand wird zwischen der zentralen Aufnahme und der Anbindung in dem ersten Querschnitt entlang der radialen Richtung ermittelt.

Die Ausdehnung der Anbindung entlang der radialen Richtung wird hier durch die zumindest teilweise zylindrische Innenumfangsfläche, einer die Anbindung bildenden Bohrung in der Ebenenplatte definiert. Die Innenumfangsfläche erstreckt sich parallel zur axialen Richtung.

Die Ebenenplatte kann eine in eine erste axiale Richtung weisende Oberseite und eine in eine der ersten axialen Richtung entgegengesetzte zweite axiale Richtung weisende Unterseite aufweisen, wobei die mindestens eine Führungsfläche an der Oberseite ein oberes Ende (und an der Unterseite ein unteres Ende) aufweist. Die Anbindung weist an der Oberseite eine obere Anbindungsfläche (und an der Unterseite eine untere Anbindungsfläche) auf. Das obere Ende und die obere Anbindungsfläche (und/oder das untere Ende und die untere Anbindungsfläche) sind auf voneinander gegenüber der axialen Richtung unterschiedlichen Höhen und damit in der axialen Richtung voneinander beabstandet angeordnet.

Die Ebenenplatte kann eine in eine erste axiale Richtung weisende Oberseite und eine in eine der ersten axialen Richtung entgegengesetzte zweite axiale Richtung weisende Unterseite, eine Anbindung für den mindestens einen Hubzylinder, eine zentral angeordnete Aufnahme zur Kontaktierung des Stempels oder eines Stempelhalters der Presse sowie mindestens eine zur axialen Richtung parallele erste zumindest teilweise zylindrische Führungsfläche zur Kontaktierung einer ersten Führungssäule und eine zur axialen Richtung parallele zweite zumindest teilweise zylindrische Führungsfläche zur Kontaktierung einer zweiten Führungssäule aufweisen. An der Unterseite der Ebenenplatte kann die erste Führungsfläche ein erstes unteres Ende und die zweite Führungsfläche ein zweites unteres Ende aufweisen. Das erste untere Ende und das zweite untere Ende können auf voneinander gegenüber der axialen Richtung unterschiedlichen Höhen und damit in der axialen Richtung voneinander beabstandet angeordnet sein.

Die Ebenenplatte kann vier (oder mehr) zumindest teilweise zylindrische Führungsflächen zur Kontaktierung von vier Führungssäulen (also jeweils einer Führungssäule) aufweisen, wobei jede Führungsfläche ein unteres Ende aufweist. Die unteren Enden von jeweils (oder von mindestens) zwei Führungsflächen können auf einer gemeinsamen Höhe angeordnet sein.

Insbesondere sind jeweils zwei Führungsflächen vorgesehen, deren untere Enden auf einer gemeinsamen Höhe angeordnet sind. Insbesondere bildet also jede der zwei zumindest teilweise zylindrischen ersten Führungsflächen ein erstes unteres Ende und jede der zwei zumindest teilweise zylindrischen zweiten Führungsflächen ein zweites unteres Ende aus. Das erste untere Ende und das zweite untere Ende können auf voneinander gegenüber der axialen Richtung unterschiedlichen Höhen angeordnet sein.

Das erste untere Ende und das zweite untere Ende können an einer Unterseite der Ebenenplatte angeordnet sein.

Die Führungsflächen können auf unterschiedlichen Höhen angeordnet sein. Damit kann eine Verkippung der Ebenenplatte um eine zur axialen Richtung senkrecht verlaufende Achse gegenüber einer Ebenenplatte mit ausschließlich auf einer gemeinsamen Höhe angeordneten Führungsflächen reduziert bzw. vollständig verhindert werden.

Die zwei Führungsflächen mit den auf der gemeinsamen Höhe angeordneten unteren Enden können in einer Umfangsrichtung um 90 oder um 180 Winkelgrad versetzt zueinander angeordnet sein.

Bevorzugt können alle unteren Enden der Führungsflächen der einen Ebenenplatte auf voneinander gegenüber der axialen Richtung unterschiedlichen Höhen angeordnet sein.

Insbesondere sind die unteren Enden einer Ebenenplatte, die auf gegenüber der axialen Richtung unterschiedlichen Höhen angeordnet sind, um jeweils mindestens 5 Millimeter, insbesondere mindestens 20 Millimeter, bevorzugt mindestens 100 Millimeter, besonders bevorzugt mindestens 200 Millimeter entlang der axialen Richtung voneinander beabstandet.

Insbesondere weist die erste Führungsfläche an der Oberseite der Ebenenplatte ein erstes oberes Ende auf, wobei das erste untere Ende und das erste obere Ende auf voneinander gegenüber der axialen Richtung unterschiedlichen Höhen und damit in der axialen Richtung in einer Distanz voneinander beabstandet angeordnet sind. Das erste untere Ende und das zweite untere Ende sind in der axialen Richtung um mindestens 50 % der Distanz, bevorzugt um mindestens 100 % der Distanz, besonders bevorzugt um mindestens 150 % der Distanz, voneinander beabstandet angeordnet.

Die Ebenenplatte kann mindestens zwei zumindest teilweise zylindrische Führungsflächen zur Kontaktierung jeweils einer Führungssäule aufweisen, wobei eine erste zumindest teilweise zylindrische Führungsfläche ein erstes unteres Ende und ein erstes oberes Ende aufweist und eine zweite zumindest teilweise zylindrische Führungsfläche ein zweites unteres Ende und ein zweites oberes Ende aufweist. Das erste untere Ende kann gegenüber der axialen Richtung unterhalb von dem zweiten unteren Ende auf einer unterschiedlichen Höhe und das erste obere Ende gegenüber der axialen Richtung unterhalb von dem zweiten oberen Ende auf einer unterschiedlichen Höhe angeordnet sein.

Die obere Anbindungsfläche kann entlang der axialen Richtung zwischen dem ersten oberen Ende und dem zweiten oberen Ende auf einer gegenüber der axialen Richtung unterschiedlichen Höhe angeordnet sein.

Bevorzugt kann die obere Anbindungsfläche entlang der axialen Richtung zwischen dem ersten oberen Ende und dem zweiten unteren Ende auf einer gegenüber der axialen Richtung unterschiedlichen Höhe angeordnet sein.

Insbesondere kann die Ebenenplatte über mindestens zwei Hubzylinder entlang einer axialen Richtung zur Betätigung des Stempels der Presse verfahrbar sein. Insbesondere weist die Ebenenplatte eine erste Anbindung für einen ersten Hubzylinder und eine zweite Anbindung für einen zweiten Hubzylinder auf. Die Anbindungen können auf einer gegenüber der axialen Richtung gemeinsamen Höhe angeordnet sein.

Insbesondere kann die Ebenenplatte über mindestens zwei Hubzylinder entlang einer axialen Richtung zur Betätigung des Stempels der Presse verfahrbar sein. Insbesondere weist die Ebenenplatte eine erste Anbindung für einen ersten Hubzylinder und eine zweite Anbindung für einen zweiten Hubzylinder auf. Die Anbindungen können auf einer gegenüber der axialen Richtung gemeinsamen Höhe angeordnet sein.

Gemäß einer anderen Ausgestaltung können die Anbindungen auf voneinander gegenüber der axialen Richtung unterschiedlichen Höhen angeordnet sein.

Gegebenenfalls kann ausschließlich ein um einen Winkelbereich von 90 oder von 180 Winkelgrad in der Umfangsrichtung gegenüber dem ersten Querschnitt gedreht angeordneter Querschnitt zum ersten Querschnitt identisch ausgeführt sein.

Die Wandstärke kann zumindest in dem ersten Bereich um mindestens 5 %, bevorzugt um mindestens 10 %, besonders bevorzugt um mindestens 20 % variieren.

Die Ebenenplatte kann eine in eine erste axiale Richtung weisende Oberseite und eine in eine der ersten axialen Richtung entgegengesetzte zweite axiale Richtung weisende Unterseite aufweisen. Die Oberseite und/oder die Unterseite der Ebenenplatte kann in dem ersten Bereich des ersten Querschnitts parallel zur ersten Mittellinie und/oder unter einem ersten Winkel von mindestens 10 Winkelgrad, bevorzugt mindestens 20 Winkelgrad, besonders bevorzugt mindestens 45 Winkelgrad, und unter einem ersten Winkel von höchstens 80 Winkelgrad, insbesondere höchstens 85 Winkelgrad zur radialen Richtung verlaufen.

Es wird weiter ein Pressenwerkzeug für eine Presse vorgeschlagen, zumindest umfassend eine erste Ebenenplatte und eine zweite Ebenenplatte. Zumindest die erste Ebenenplatte ist über mindestens einen Hubzylinder entlang einer axialen Richtung zur Betätigung eines Stempels der Presse verfahrbar. Zumindest die erste Ebenenplatte weist eine Anbindung für den mindestens einen Hubzylinder auf. Jede Ebenenplatte weist jeweils mindestens eine zumindest teilweise zylindrische Führungsfläche zur Kontaktierung einer für die Ebenenplatten gemeinsamen Führungssäule und jeweils eine zentral angeordnete Aufnahme zur Kontaktierung des Stempels oder eines Stempelhalters der Presse auf. Die Ebenenplatten sind entlang einer axialen Richtung übereinander anordenbar, so dass die jeweils mindestens eine Führungsfläche jeder Ebenenplatte koaxial zueinander angeordnet ist. Zumindest die erste Ebenenplatte kann wie eine vorstehend beschriebene Ebenenplatte ausgeführt sein. Die Ebenenplatten sind entlang der axialen Richtung und entlang der radialen Richtung zumindest teilweise einander überlappend anordenbar. Sie sind insbesondere also so zueinander anordenbar, dass zumindest Teile der beiden Ebenenplatten auf einer gleichen Höhe gegenüber der axialen Richtung angeordnet sind (und damit entlang der radialen Richtung benachbart zueinander).

Die Ebenenplatten können ineinander geschachtelt (und damit nicht ausschließlich in der axialen Richtung zueinander beabstandet) angeordnet werden, so dass eine Bauhöhe des Pressenwerkzeugs reduzierbar ist. Geschachtelt heißt hier, dass die Ebenenplatten entlang der axialen Richtung übereinander und in der radialen Richtung zumindest mit Teilen der Ebenenplatten nebeneinander anordenbar sind.

Die Ebenenplatten des Pressenwerkzeugs können jeweils mindestens zwei zumindest teilweise zylindrische Führungsflächen zur Kontaktierung von zwei für die Ebenenplatten gemeinsamen Führungssäulen aufweisen. Die erste Ebenenplatte hat eine erste zumindest teilweise zylindrische Führungsfläche mit einem ersten unteren Ende und die zweite Ebenenplatte eine dritte zumindest teilweise zylindrische Führungsfläche mit einem dritten unteren Ende. Die erste Ebenenplatte ist gegenüber der axialen Richtung oberhalb von der zweiten Ebenenplatte angeordnet. Die Ebenenplatten sind so zueinander angeordnet, dass die erste Führungsfläche eine erste Führungssäule der gemeinsamen Führungssäulen und die dritte Führungsfläche eine (andere, also) zweite Führungssäule der gemeinsamen Führungssäulen kontaktiert. Das erste untere Ende ist gegenüber der axialen Richtung unterhalb des dritten unteren Endes angeordnet.

Wie vorstehend zur Ebenenplatte ausgeführt, können die Führungsflächen einer Ebenenplatte auf unterschiedlichen Höhen angeordnet sein, so dass die Führungsflächen von unterschiedlichen Ebenenplatten an unterschiedlichen Führungssäulen in der axialen Richtung in einer gegenüber den Ebenenplatten vertauschten Reihenfolge anordenbar sind. Damit kann eine Verkippung der Ebenenplatte um eine zur axialen Richtung senkrecht verlaufende Achse gegenüber einer Ebenenplatte mit ausschließlich auf einer gemeinsamen Höhe angeordneten Führungsflächen reduziert bzw. vollständig verhindert werden und eine verschachtelte Anordnung der Ebenenplatten realisiert werden, so dass eine insgesamt geringere Bauhöhe des Pressenwerkzeug ermöglicht ist.

Die Ausführungen zu der Ebenenplatte gelten gleichermaßen für das Pressenwerkzeug und umgekehrt.

Es wird weiter die Verwendung einer der vorstehend beschriebenen Ebenenplatten, in einem Pressenwerkzeug, insbesondere in einem vorstehend beschriebenen Pressenwerkzeug, einer Presse zur Herstellung eines Grünlings vorgeschlagen. Mit der Presse können insbesondere sinterfähige Grünlinge hergestellt werden, also Grünlinge, die nach dem Pressvorgang gesintert werden können. Insbesondere können in der Presse metallische und/oder keramische Pulver zu Grünlingen verpresst werden.

Die Ebenenplatte ist über mindestens einen Hubzylinder entlang einer axialen Richtung zur Betätigung eines Stempels der Presse verfahrbar. Die Ebenenplatte weist eine Anbindung für den mindestens einen Hubzylinder, mindestens eine zur axialen Richtung parallele zumindest teilweise zylindrische Führungsfläche zur Kontaktierung einer Führungssäule und eine zentral angeordnete Aufnahme zur Kontaktierung des Stempels oder des Stempelhalters der Presse auf. Die Ebenenplatte weist in zumindest einem ersten Querschnitt, der parallel zur axialen Richtung und entlang einer zur axialen Richtung senkrecht verlaufenden radialen Richtung durch die Anbindung und die Aufnahme verläuft, zumindest einen ersten Bereich zwischen der Anbindung und der Aufnahme mit einer Wandstärke auf , wobei sich die Wandstärke in dem ersten Bereich zumindest zwischen der Aufnahme und dem Minimum kontinuierlich ändert und die Wandstärke in dem ersten Bereich und beabstandet von der Aufnahme sowie von der Anbindung zumindest ein Minimum aufweist.

Gemäß einer weiteren Ausgestaltung ist die Ebenenplatte über mindestens einen Hubzylinder entlang einer axialen Richtung zur Betätigung eines Stempels der Presse verfahrbar. Die Ebenenplatte weist eine Anbindung für den mindestens einen Hubzylinder, mindestens eine zur axialen Richtung parallele zumindest teilweise zylindrische Führungsfläche zur Kontaktierung einer Führungssäule und eine zentral angeordnete Aufnahme zur Kontaktierung des Stempels oder des Stempelhalters der Presse auf. Die Ebenenplatte weist in zumindest einer Mehrzahl von ersten Querschnitten, die parallel zur axialen Richtung und entlang einer zur axialen Richtung senkrecht verlaufenden radialen Richtung und in einer Umfangsrichtung zueinander versetzt verlaufen, zumindest einen ersten Bereich zwischen der Aufnahme und einer radialen Position, an der die Anbindung (z. B. in einem gegenüber diesem ersten Querschnitt in Umfangsrichtung versetzt angeordneten ersten Querschnitt) angeordnet ist, auf, in dem sich eine Wandstärke ändert. Die Ebenenplatte ist dabei so gestaltet, dass sich eine Formlinie der Aufnahme im Betrieb der Ebenenplatte und bei Übertragung einer Presskraft um höchstens 0,05 Millimeter verformt.

Die Ausführungen zu den Ebenenplatten und/oder dem Pressenwerkzeug gelten gleichermaßen für die vorgeschlagene Verwendung und umgekehrt.

Mit der Ebenenplatte und/oder dem Pressenwerkzeug ist insbesondere ein Verfahren zur Betätigung einer Presse realisierbar, wobei die Presse zumindest eine Führungssäule und zumindest einen Hubzylinder sowie ein (vorstehend beschriebenes) Pressenwerkzeug umfasst. Das Verfahren umfasst zumindest die folgenden Schritte:
a) Bereitstellen der Presse und des Pressenwerkzeugs;
b) Anordnen der ersten Ebenenplatte und der zweiten Ebenenplatte in der Presse; wobei die Ebenenplatten entlang einer axialen Richtung so übereinander angeordnet sind, dass die jeweils mindestens eine zumindest teilweise zylindrische Führungsfläche jeder Ebenenplatte koaxial zueinander angeordnet sind;
wobei die Ebenenplatten entlang der axialen Richtung einander überlappend angeordnet sind, so dass zumindest Teile der beiden Ebenenplatten auf einer gleichen Höhe gegenüber der axialen Richtung angeordnet sind (und damit entlang der radialen Richtung benachbart zueinander).

Die Gestalt der Ebenenplatte lässt sich mit den bekannten Herstellungsverfahren wie Drehen, Fräsen, Sägen, Bohren sowie Schleifen, Drahtschneiden, Senkerodieren und Hartfräsen etc. erzeugen. Die Ebenenplatte kann durch sogenannte additive Verfahren, z. B. Lasersintern (3D-Druck Verfahren, zur Herstellung von räumlichen Strukturen aus pulverförmigen Ausgangsmaterial durch Sintern; Werkstück wird schichtweise erzeugt), hergestellt werden. Hierdurch ist eine freie Gestaltung der Ebenenplatte möglich, wobei das Gewicht der Ebenenplatte reduziert und eine Steifigkeit bzw. Elastizität der Ebenenplatte gezielt eingestellt werden kann.

Die Steifigkeit der Ebenenplatte bezeichnet insbesondere den Widerstand der Ebenenplatte gegenüber einer Verformung in der axialen Richtung gegenüber einer durch die Hubzylinder auf die Anbindung bzw. durch den Stempel oder Stempelhalter auf die Aufnahme einwirkenden Presskraft. Die Einheit der Steifigkeit ist: N/m [Newton/Meter].

Die Steifigkeit kann beispielsweise wie folgt bestimmt werden: Über eine FEM-Analyse, bei der die Verformung, insbesondere die elastische Verformung, der Ebenenplatte bei einer bestimmen Presskraft [N], welche insbesondere in der axialen Richtung auf die Ebenenplatte einwirkt, bestimmt wird (also die Verschiebung des Materials der Ebenenplatte in Richtung der axialen Richtung, welche in [m] angegeben werden kann). Das Verhältnis dieser Größen (Presskraft [N]/Materialverschiebung [m]) stellt die Steifigkeit der Ebenenplatte dar.

Je geringer die Steifigkeit der Ebenenplatte, desto größer ist die elastische Verformung (die Elastizität) der Ebenenplatte. Unterschiedliche Steifigkeiten der unterschiedlichen Ebenenplatten können bei der Herstellung von Grünlingen (gerade bei der Entformung bzw. während des Entspannens der Presskraft) zu Rissbildungen und damit zu einer Zerstörung des Grünlings führen.

Die Elastizität bzw. die Steifigkeit zumindest von zwei Ebenenplatten, insbesondere von allen (wie vorstehend beschriebenen) Ebenenplatten weicht bevorzugt um maximal 20 % oder um maximal 10 % voneinander ab.

Es sei angemerkt, dass die hier verwendeten Zahlwörter ("erste", "zweite",...) vorrangig (nur) zur Unterscheidung von mehreren gleichartigen Gegenständen oder Größen dienen, also insbesondere keine Abhängigkeit und/oder Reihenfolge dieser Gegenstände oder Größen zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere wird darauf hingewiesen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: ein Pressenwerkzeug einer Presse in einer perspektivischen Ansicht, teilweise im Schnitt;
- Fig. 2:: das Pressenwerkzeug nach Fig. 1 in einer perspektivischen Ansicht, im Schnitt;
- Fig. 3:: das Pressenwerkzeug nach Fig. 1 und 2 in einer Ansicht von oben entlang der axialen Richtung;
- Fig. 4:: eine Seitenansicht des Pressenwerkzeugs im Schnitt IV-IV gemäß Fig. 3;
- Fig. 5:: das Pressenwerkzeug nach Fig. 1 bis 4 in einer Seitenansicht in einem weiteren Schnitt V-V gemäß Fig. 3;
- Fig. 6:: eine Ebenenplatte des Pressenwerkzeugs nach Fig. 1 bis 5 in einer perspektivischen Ansicht;
- Fig. 7:: die Ebenenplatte nach Fig. 6 in einer weiteren perspektivischen Ansicht;
- Fig. 8:: die Ebenenplatte nach Fig. 6 und 7 in einer Seitenansicht im Schnitt VIII-VIII gemäß Fig. 9;
- Fig. 9:: die Ebenenplatte nach Fig. 6 bis 8 in einer Ansicht von oben entlang der axialen Richtung;
- Fig. 10:: ein bekanntes Pressenwerkzeug in einer Seitenansicht im Schnitt;
- Fig. 11:: einen bekannten Adapter für eine Presse in einer Seitenansicht im Schnitt;
- Fig. 12:: ein bekanntes Pressengestell für einen Adapter;
- Fig. 13:: ein weiteres Ausführungsbeispiel eines Pressenwerkzeugs einer Presse in einer perspektivischen Ansicht, teilweise im Schnitt;
- Fig. 14:: das Pressenwerkzeug nach Fig. 13 in einer Ansicht von oben entlang der axialen Richtung;
- Fig. 15:: eine Seitenansicht des Pressenwerkzeugs nach Fig. 13 und 14 im Schnitt XV-XV gemäß Fig. 14;
- Fig. 16:: das Pressenwerkzeug nach Fig. 13 bis 15 in einer Seitenansicht in einem weiteren Schnitt XVI-XVI gemäß Fig. 14;
- Fig. 17:: eine Ebenenplatte des Pressenwerkzeugs nach Fig. 13 bis 16 in einer perspektivischen Ansicht;
- Fig. 18:: die Ebenenplatte nach Fig. 17 in einer Ansicht von oben entlang der axialen Richtung;
- Fig. 19:: die Ebenenplatte nach Fig. 17 und 18 in einer Seitenansicht;
- Fig. 20:: die Ebenenplatte nach Fig. 17 bis 19 in einer Seitenansicht im Schnitt XX-XX gemäß Fig. 18; und
- Fig. 21:: die Ebenenplatte nach Fig. 17 bis 20 in einer Seitenansicht im Schnitt XXI-XXI gemäß Fig. 18.

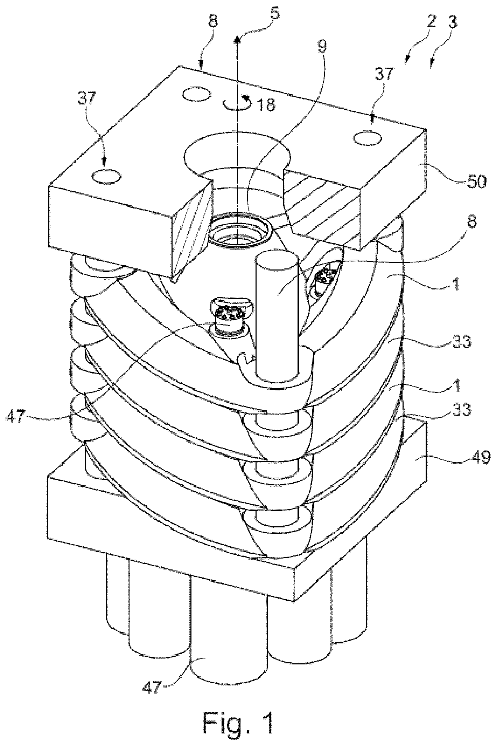

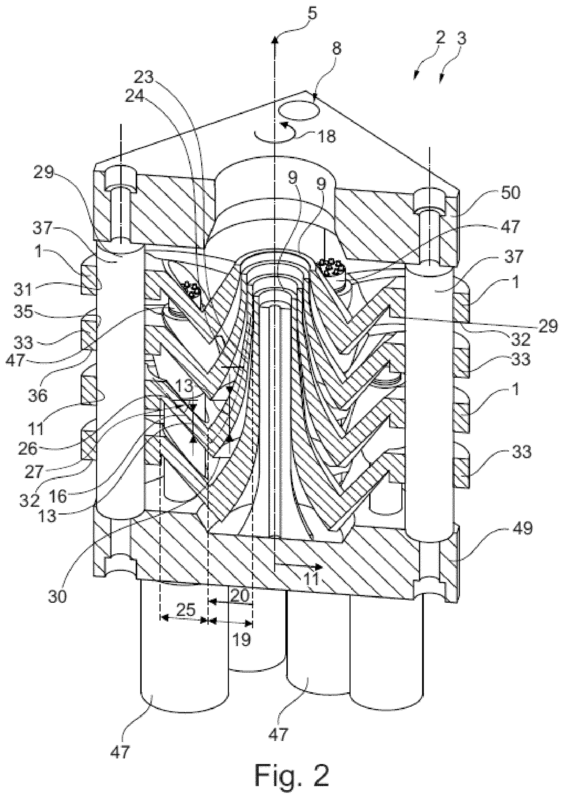

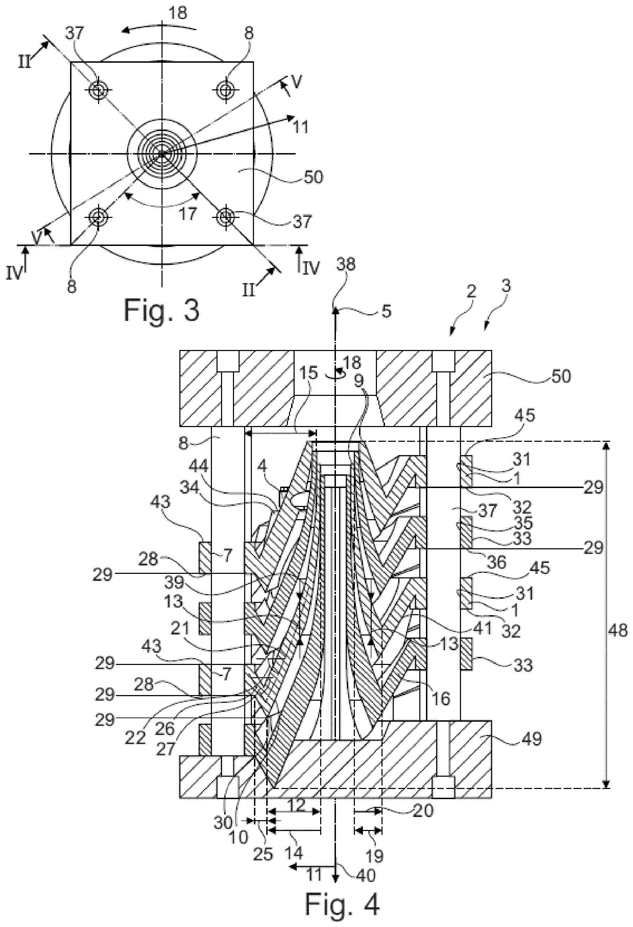

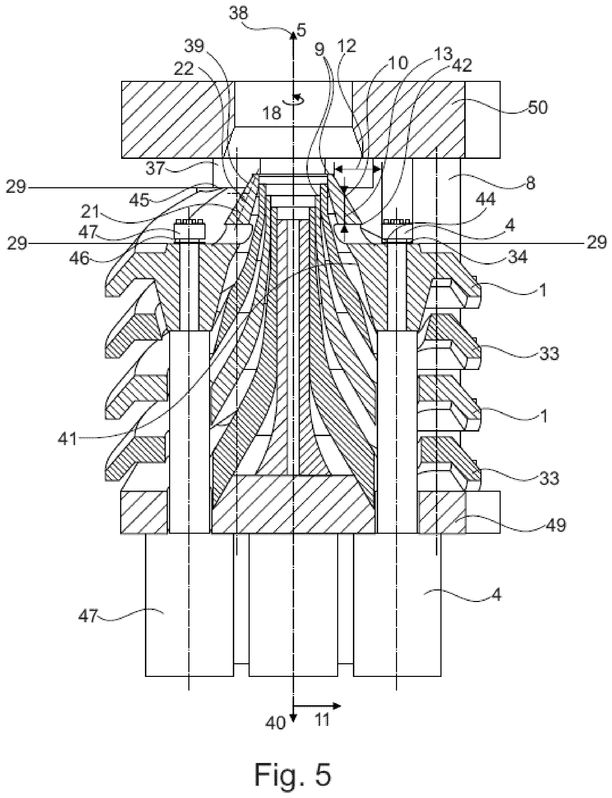

Fig. 1 zeigt ein Pressenwerkzeug 2 einer Presse 3 in einer perspektivischen Ansicht, teilweise im Schnitt. Fig. 2 zeigt das Pressenwerkzeug 2 nach Fig. 1 in einer perspektivischen Ansicht, im Schnitt II-II gemäß Fig. 3. Fig. 3 zeigt das Pressenwerkzeug 2 nach Fig. 1 und 2 in einer Ansicht von oben entlang der axialen Richtung 5. In der Fig. 3 sind die Verläufe der Schnittlinien II-II, IV-IV und V-V dargestellt. Fig. 4 zeigt eine Seitenansicht des Pressenwerkzeugs im Schnitt IV-IV gemäß Fig. 3. Fig. 5 zeigt das Pressenwerkzeug 2 nach Fig. 1 bis 4 in einer Seitenansicht in einem weiteren Schnitt V-V gemäß Fig. 3. Die Fig. 1 bis 5 werden im Folgenden gemeinsam beschrieben.

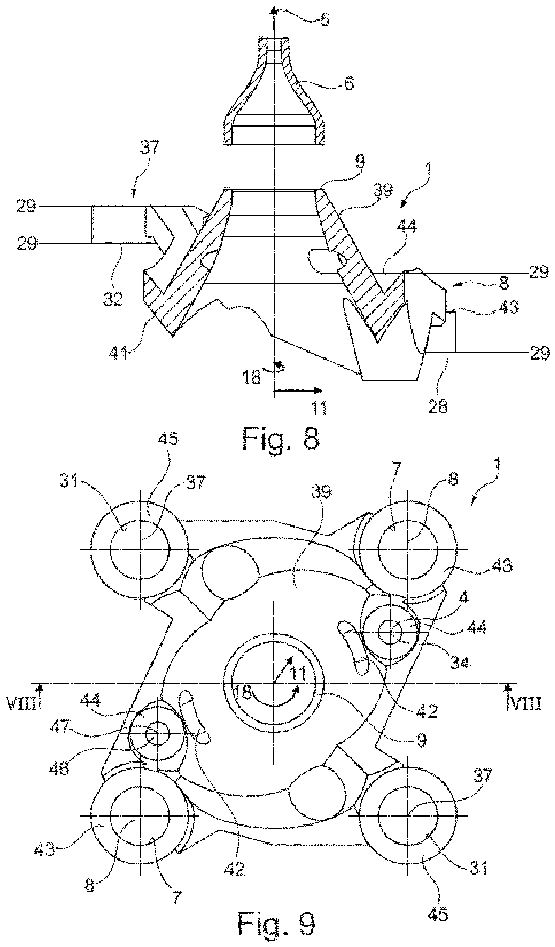

Das Pressenwerkzeug 2 umfasst eine Mehrzahl von Ebenenplatten 1, 33, zwei erste Ebenenplatten 1 und zwei zweite Ebenenplatten 33, also vier, die entlang der axialen Richtung 5 übereinander angeordnet sind. Jede der vier Ebenenplatten 1, 33 wird, wie in Fig. 9 dargestellt, durch zwei Hubzylinder, einen ersten Hubzylinder 4 und einem zweiten Hubzylinder 47 entlang der axialen Richtung 5 verlagert. Jede Ebenenplatte 1, 33 weist also zwei Anbindungen, eine erste Anbindung 34 für den ersten Hubzylinder 4 und eine zweite Anbindung 46 für den zweiten Hubzylinder 47 auf. Weiter sind vier Führungssäulen, zwei erste Führungssäulen 8 und zwei zweite Führungssäulen 37 vorgesehen, wobei jede Ebenenplatte 1, 33 jeweils vier zylindrische Führungsflächen, nämlich erste Führungsflächen 7 an der ersten Führungssäule 8 und zweite Führungsflächen 31 an der zweiten Führungssäule 37 (wobei die zweite Ebenenplatte 33 zumindest eine dritte Führungsfläche 35 an der zweiten Führungssäule 37 aufweist) zur Kontaktierung der für die Ebenenplatten 1, 33 gemeinsamen Führungssäulen 8, 37 aufweist. Weiter weist jede Ebenenplatte 1, 33 jeweils eine zentral angeordnete Aufnahme 9 zur Kontaktierung des Stempels 6 (siehe Fig. 8) oder eines Stempelhalters (hier ebenfalls durch den Stempel 6 symbolisiert) der Presse 3 auf. Die Ebenenplatten 1, 33 sind entlang einer axialen Richtung 5 übereinander angeordnet, so dass die Führungsflächen 7, 31, 35 jeder Ebenenplatte 1, 33 jeweils koaxial zu den korrespondierenden Führungsflächen 7, 31, 35 der anderen Ebenenplatten 1, 33 angeordnet sind. Die Ebenenplatten 1, 33 sind entlang der axialen Richtung 5 und entlang der radialen Richtung 11 zumindest teilweise einander überlappend anordenbar, so dass zumindest Teile der verschiedenen Ebenenplatten 1, 33 auf einer gleichen Höhe 29 gegenüber der axialen Richtung 5 (und damit entlang der radialen Richtung 11 benachbart zueinander) angeordnet sind. Die Ebenenplatten 1, 33 können ineinander geschachtelt (und damit nicht ausschließlich in der axialen Richtung 5 zueinander beabstandet) angeordnet werden, so dass eine Bauhöhe 48 des Pressenwerkzeugs 2 reduzierbar ist. Geschachtelt heißt hier, dass die Ebenenplatten 1, 33 entlang der axialen Richtung 5 übereinander und in der radialen Richtung 11 zumindest mit Teilen der unterschiedlichen Ebenenplatten 1, 33 nebeneinander anordenbar sind.

Das Pressenwerkzeug 2 umfasst hier weiter eine Grundplatte 49 und eine Matrizenaufnahmeplatte 50, zwischen denen sich die Führungssäulen 8, 37 erstrecken und die Ebenenplatten 1, 33 angeordnet sind.

Die Ebenenplatten 1, 33 des Pressenwerkzeugs 2 weisen jeweils vier zylindrische Führungsflächen 7, 31, 35 zur Kontaktierung von vier für die Ebenenplatten 1, 33 gemeinsamen Führungssäulen 8, 37 auf. Eine erste Ebenenplatte 1 weist eine erste Führungsfläche 7 mit einem ersten unteren Ende 28 und die zweite Ebenenplatte 33 eine dritte Führungsfläche 35 mit einem dritten unteren Ende 36 auf. Die erste Ebenenplatte 1 ist gegenüber der axialen Richtung 5 oberhalb von der zweiten Ebenenplatte 33 anordenbar und die Ebenenplatten 1, 33 sind dabei so zueinander anordenbar, dass die erste Führungsfläche 7 eine erste Führungssäule 8 der gemeinsamen Führungssäulen 8, 37 und die dritte Führungsfläche 35 eine (andere, also) zweite Führungssäule 37 der gemeinsamen Führungssäulen 8, 37 kontaktiert. Dabei ist das erste untere Ende 28 gegenüber der axialen Richtung 5 unterhalb des dritten unteren Endes 36 angeordnet (siehe Fig. 4 mit dem in Fig. 3 dargestellten Schnittverlauf IV-IV).

Wie vorstehend zur Ebenenplatte 1, 33 ausgeführt, sind die Führungsflächen 7, 31, 35 einer Ebenenplatte 1, 33 auf unterschiedlichen Höhen 29 anzuordnen, so dass die Führungsflächen 7, 31, 35 von unterschiedlichen Ebenenplatten 1, 33 an unterschiedlichen Führungssäulen 8, 37 in der axialen Richtung 5 in einer gegenüber den Ebenenplatten 1, 33 vertauschten Reihenfolge anordenbar sind. Damit kann eine Verkippung der Ebenenplatte 1, 33 um eine zur axialen Richtung 5 senkrecht verlaufende Achse gegenüber einer Ebenenplatte 1, 33 mit ausschließlich auf einer gemeinsamen Höhe 29 angeordneten Führungsflächen 7, 31, 35 reduziert bzw. vollständig verhindert und eine verschachtelte Anordnung der Ebenenplatten 1, 33 realisiert werden, so dass eine insgesamt geringere Bauhöhe 48 des Pressenwerkzeug 2 ermöglicht ist.

Mit der Ebenenplatte 1, 33 und dem Pressenwerkzeug 2 ist ein Verfahren zur Betätigung einer Presse 3 realisierbar, wobei die Presse 3 zumindest eine Führungssäule 8, 37 und zumindest einen Hubzylinder 4, 47 sowie ein vorstehend beschriebenes Pressenwerkzeug 2 umfasst. Gemäß Schritt a) des Verfahrens wird die Presse 3 und das Pressenwerkzeug 2 bereitgestellt. Gemäß Schritt b) des Verfahrens werden zumindest die erste Ebenenplatte 1 und die zweite Ebenenplatte 33 in der Presse 3 angeordnet (also zwischen Grundplatte 49 und Matrizenaufnahmeplatte 50). Dabei sind die Ebenenplatten 1, 33 entlang einer axialen Richtung 5 so übereinander angeordnet, dass die jeweils mindestens eine zylindrische Führungsfläche 7, 31, 35 jeder Ebenenplatte 1, 33 koaxial zueinander angeordnet sind. Die Ebenenplatten 1, 33 sind entlang der axialen Richtung 5 und entlang der radialen Richtung 11 zumindest teilweise einander überlappend angeordnet, so dass zumindest Teile der beiden Ebenenplatten 1, 33 auf einer gleichen Höhe 29 gegenüber der axialen Richtung 5 (und damit entlang der radialen Richtung 11 benachbart zueinander) angeordnet sind.

Erkennbar sind die Ebenenplatten 1, 33 einteilig ausgeführt.

Im Folgenden wird auf die jeweils zweitunterste der dargestellten Ebenenplatten der Fig. 1 bis 5 Bezug genommen. Die Ebenenplatte 1 ist über mindestens einen Hubzylinder 4, 47 entlang einer axialen Richtung 5 zur Betätigung eines Stempels 6 der Presse 3 verfahrbar. Die Ebenenplatte 1 weist eine Anbindung 34, 46 für den mindestens einen Hubzylinder 4, 47, mindestens eine zur axialen Richtung 5 parallele zylindrische Führungsfläche 7, 31 zur Kontaktierung einer Führungssäule 8, 37 und eine zentral angeordnete Aufnahme 9 zur Kontaktierung des Stempels 6 oder eines Stempelhalters der Presse 3 auf. Die Ebenenplatte 1 weist in zumindest einem ersten Querschnitt 10, der parallel zur axialen Richtung 5 und entlang einer zur axialen Richtung 5 senkrecht verlaufenden radialen Richtung 11 zwischen der Aufnahme 9 und der Führungsfläche 7 verläuft, zumindest einen ersten Bereich 12 auf, in dem sich eine Wandstärke 13 der Ebenenplatte 1 kontinuierlich ändert.

Die dargestellte Ebenenplatte 1 wird über zwei Hubzylinder 4, 47 betätigt, wobei die Ebenenplatte 1 jeweils eine Anbindung 34, 46 für jeden Hubzylinder 4, 47 aufweist. Der bzw. die Hubzylinder 4, 47 ist/sind insbesondere so gegenüber der Ebenenplatte 1 angeordnet, dass die Ebenenplatte 1 durch ein möglichst geringes Drehmoment um eine zur radialen Richtung 11 parallelen Achse beaufschlagt wird.

Die Ebenenplatte 1 weist vier Führungsflächen 7, 31 auf, die in einer Richtung senkrecht zur axialen Richtung 5 voneinander beabstandet angeordnet sind. Über die mindestens eine Führungsfläche 7, 31 kann die Ebenenplatte 1 entlang der axialen Richtung 5 durch die mindestens eine Führungssäule 8, 37 geführt werden, die sich entlang der axialen Richtung 5 erstreckt. Über die mindestens eine Führungssäule 8, 37 wird eine Verdrehung der Ebenenplatte 1 in einer Umfangsrichtung 18 und/oder eine Verkippung der Ebenenplatte 1 um eine entlang einer radialen Richtung 11 verlaufenden Drehachse/Richtung verringert bzw. verhindert. Die verschiedenen Ebenenplatten 1, 33 eines oberen oder unteren Pressenwerkzeugs 2 (hier sind nur untere Pressenwerkzeuge 2 dargestellt) werden durch gemeinsame Führungssäulen 8, 37 geführt.

Die Aufnahme 9 zur Kontaktierung des Stempels 6 oder eines Stempelhalters der Presse 3 ist zentral angeordnet, d. h. in einer Mitte der Ebenenplatte 1, wenn diese entlang der axialen Richtung 5 betrachtet wird (siehe Fig. 3). Die Aufnahme 9 ist zwischen einer Mehrzahl von Hubzylindern 4, 47 und einer Mehrzahl von Führungssäulen 8, 37 angeordnet, so dass die Ebenenplatte 1 bei einer Beaufschlagung der Ebenenplatte 1 mit einer Presskraft durch ein möglichst geringes Drehmoment um eine zur radialen Richtung 11 parallelen Achse beaufschlagt wird.

Die Aufnahme 9 ist hier kreisrund ausgeführt und weist eine parallel zur axialen Richtung 5 verlaufende, zur Aufnahme 9 konzentrisch angeordnete Längsachse auf. Die radiale Richtung 11 erstreckt sich senkrecht zur axialen Richtung 5 und jeweils ausgehend von der Längsachse.

Die Aufnahme 9 weist eine Aufnahmefläche zur Kontaktierung und Abstützung des Stempels 6 bzw. Stempelhalters auf. Der Stempel 6 bzw. der Stempelhalter kann über eine Klemmplatte, eine Verschraubung, einen Bajonettverschluss oder ähnliches an der Aufnahme 9 befestigt werden.

Die Ebenenplatte weist in zumindest einem ersten Querschnitt 10, der parallel zur axialen Richtung 5 und entlang einer zur axialen Richtung 5 senkrecht verlaufenden radialen Richtung 11 zwischen der Aufnahme 9 und der ersten Führungsfläche 7 verläuft, zumindest einen ersten Bereich 12 auf, in dem sich eine Wandstärke 13 der Ebenenplatte 1 kontinuierlich ändert. Dabei wird die Wandstärke 13 in einer Richtung parallel zur axialen Richtung 5 ermittelt.

Diese Wandstärke 13 ändert sich kontinuierlich, d. h. an jeder zueinander benachbarten Position entlang der radialen Richtung 11 weist der erste Bereich 12 eine jeweils andere Wandstärke 13 auf.

Der erste Bereich 12 erstreckt sich in der radialen Richtung 11 über eine erste Erstreckung 14, die mindestens 10 % eines kleinsten Abstandes 15 zwischen der Aufnahme 9 und der ersten Führungsfläche 7 in dem ersten Querschnitt 10 entlang der radialen Richtung 11 beträgt.

Die Aufnahme 9 umfasst eine Aufnahmefläche oder einen Funktionsbereich (im Folgenden auch als Teile der Aufnahme 9 bezeichnet) an der Ebenenplatte 1, an dem der Stempel 6 oder ein Stempelhalter anordenbar ist. Der kleinste Abstand 15 wird zwischen der ersten Führungsfläche 7 und einem, der Führungsfläche 7 entlang der radialen Richtung 11 am nächsten angeordneten Teil der Aufnahme 9 ermittelt.

Die Ebenenplatte 1 weist in zumindest einem zweiten Querschnitt 16 (siehe Fig. 2 und 4), der entlang der radialen Richtung 11 zwischen der Aufnahme 9 und der zweiten Führungsfläche 31 verläuft und gegenüber dem ersten Querschnitt 10 um einen Winkelbereich 17 von hier 90 Winkelgrad in einer Umfangsrichtung 18 gedreht angeordnet ist (siehe Fig. 3), zumindest einen zweiten Bereich 19 auf, in dem sich die Wandstärke 13 der Ebenenplatte 1 kontinuierlich ändert. Dabei erstreckt sich der zweite Bereich 19 in der radialen Richtung 11 über eine zweite Erstreckung 20, die sich von der ersten Erstreckung 14 (betragsmäßig) unterscheidet.

Der zweite Bereich 19 weist eine Wandstärke 13 und eine zweite Mittellinie 23 auf, wobei sich der zweite Bereich 19 in der radialen Richtung 11 über eine zweite Erstreckung 20 erstreckt, in der die zweite Mittellinie 23 unter einem zweiten Winkel 24 zur radialen Richtung 11 verläuft; wobei sich die zweite Erstreckung 20 von der ersten Erstreckung 14 unterscheidet.

Aus Fig. 4 und 5 ist erkennbar, dass ausschließlich ein um einen Winkelbereich 17 von 180 Winkelgrad in der Umfangsrichtung 18 gegenüber dem ersten Querschnitt 10 gedreht angeordneter Querschnitt zum ersten Querschnitt 10 identisch ausgeführt ist.

Auch der zweite Querschnitt 16 verläuft parallel zur axialen Richtung 5 und entlang einer zur axialen Richtung 5 senkrecht verlaufenden radialen Richtung 11, also gegenüber dem ersten Querschnitt 10 nur in einer Umfangsrichtung 18 gedreht.

Erkennbar variiert die Wandstärke 13 in dem ersten Bereich 12 und in dem zweiten Bereich 19.

Der erste Bereich 12 weist in dem ersten Querschnitt 10 eine erste Mittellinie 21 auf, wobei die erste Mittelinie 21 unter einem ersten Winkel 22 zur radialen Richtung 11 verläuft. Die erste Mittellinie 21 (und auch die zweite Mittellinie 23) wird durch die Mittelpunkte der, an der jeweiligen radialen Position vorliegenden Wandstärke 13 gebildet.

Die Ebenenplatte 1 weist in dem ersten Querschnitt 10 (und in dem zweiten Querschnitt 16) einen, sich in der radialen Richtung 11 an den ersten Bereich 12 (bzw. an den zweiten Bereich 19) anschließenden dritten Bereich 25 auf, wobei der dritte Bereich 25 eine dritte Mittellinie 26 aufweist, wobei die dritte Mittellinie 26 unter einem dritten Winkel 27 zur radialen Richtung 11 verläuft, wobei der erste Winkel 22 (bzw. der zweite Winkel 24) und der dritte Winkel 27 gegenüber der radialen Richtung 11 gegenläufig orientiert sind.

Die Ebenenplatte 1 weist eine in eine erste axiale Richtung 38 weisende Oberseite 39 und eine in eine der ersten axialen Richtung 38 entgegengesetzte zweite axiale Richtung 40 weisende Unterseite 41 auf. Die Oberseite 39 und die Unterseite 41 der Ebenenplatte 1 verlaufen in dem ersten Bereich 12 des ersten Querschnitts 10 unter einem ersten Winkel 22 und in dem dritten Bereich 25 unter einem dritten Winkel 27 zur radialen Richtung 11.

Der erste Querschnitt 10 erstreckt sich durch die erste Führungsfläche 7 hindurch und die erste Führungsfläche 7 weist ein erstes unteres Ende 28 (an der Unterseite 41 der Ebenenplatte 1) auf, das gegenüber der axialen Richtung 5 auf einer Höhe 29 angeordnet ist. In dem ersten Querschnitt 10 (und in dem zweiten Querschnitt 16) zwischen dem ersten Bereich 12 (bzw. dem zweiten Bereich 19) und dem dritten Bereich 25 ist ein Wendebereich 30 der Ebenenplatte 1 angeordnet. Der in dem ersten Querschnitt 10 zwischen dem ersten Bereich 12 und dem dritten Bereich 25 angeordnete Wendebereich 30 ist gegenüber der axialen Richtung 5 unterhalb des ersten unteren Endes 28 angeordnet.

Weiter weist die Ebenenplatte 1 mindestens zwei zylindrische Führungsflächen 7, 31 zur Kontaktierung jeweils einer Führungssäule 8, 37 auf, wobei eine zylindrische erste Führungsfläche 7 ein erstes unteres Ende 28 und eine zylindrische zweite Führungsfläche 31 ein zweites unteres Ende 32 aufweist, wobei das erste untere Ende 28 und das zweite untere Ende 32 auf voneinander gegenüber der axialen Richtung 5 unterschiedlichen Höhen 29 angeordnet sind.

Die unteren Enden, also das erste untere Ende 28 und das zweite untere Ende 32 sind an einer Unterseite 41 der Ebenenplatte 1 angeordnet. Die unteren Enden 28, 32 von jeweils zwei zylindrischen Führungsflächen 7, 31 einer Ebenenplatte 1 (nämlich die von der jeweils ersten Führungsfläche 7 oder die von der jeweils zweiten Führungsfläche 31) sind auf einer gemeinsamen Höhe 29 angeordnet (siehe Fig. 2). Die zwei zylindrischen Führungsflächen 7, 31 mit den auf der gemeinsamen Höhe 29 angeordneten unteren Enden 28, 32 sind in einer Umfangsrichtung 18 um 180 Winkelgrad versetzt zueinander angeordnet.

Die Ebenenplatte 1 weist mindestens zwei zylindrische Führungsflächen 7, 31 zur Kontaktierung jeweils einer Führungssäule 8, 37 auf, wobei eine erste zylindrische Führungsfläche 7 ein erstes unteres Ende 28 und ein erstes oberes Ende 43 aufweist und eine zweite zylindrische Führungsfläche 31 ein zweites unteres Ende 32 und ein zweites oberes Ende 45 aufweist, wobei das erste untere Ende 28 gegenüber der axialen Richtung 5 unterhalb von dem zweiten unteren Ende 32 auf einer unterschiedlichen Höhe 29 angeordnet ist und wobei das erste obere Ende 43 gegenüber der axialen Richtung 5 unterhalb von dem zweiten oberen Ende 45 auf einer unterschiedlichen Höhe 29 angeordnet ist (siehe Fig. 4).

Die Anbindung 34 an der Oberseite 39 weist eine obere Anbindungsfläche 44 auf. Das erste obere Ende 43 und die obere Anbindungsfläche 44 sind auf voneinander gegenüber der axialen Richtung 5 unterschiedlichen Höhen 29 und damit in der axialen Richtung 5 voneinander beabstandet angeordnet (siehe Fig. 4).

Die obere Anbindungsfläche 44 ist entlang der axialen Richtung 5 zwischen dem ersten oberen Ende 43 und dem zweiten oberen Ende 45 auf einer gegenüber der axialen Richtung 5 unterschiedlichen Höhe 29 angeordnet (siehe Fig. 4).

Die obere Anbindungsfläche 44 ist entlang der axialen Richtung 5 zwischen dem ersten oberen Ende 43 und dem zweiten unteren Ende 32 auf einer gegenüber der axialen Richtung 5 unterschiedlichen Höhe 29 angeordnet (siehe Fig. 4).

In Fig. 5 ist mit Bezug auf die oberste der Ebenenplatten 1, 33 dargestellt, dass die (erste) Ebenenplatte 1 in zumindest einem ersten Querschnitt 10, der parallel zur axialen Richtung 5 und entlang einer zur axialen Richtung 5 senkrecht verlaufenden radialen Richtung 11 zwischen der ersten Anbindung 34 und der Aufnahme 9 (und zwischen der zweiten Anbindung 46 und der Aufnahme 9) verläuft, zumindest einen ersten Bereich 12 mit einer Wandstärke 13 aufweist, wobei die Wandstärke 13 in dem ersten Bereich 12 und beabstandet von der Aufnahme 9 sowie von der ersten Anbindung 34 (bzw. von der zweiten Anbindung 46) ein Minimum 42 aufweist.

Die Ebenenplatte 1 wird über zwei Hubzylinder 4, 47 kontaktiert und ist entlang einer axialen Richtung 5 zur Betätigung eines Stempels 6 der Presse 3 verfahrbar. Die Ebenenplatte 1 weist eine erste Anbindung 34 für einen ersten Hubzylinder 4 und eine zweite Anbindung 46 für einen zweiten Hubzylinder 47 auf. Die Anbindungen 34, 46 sind auf einer gegenüber der axialen Richtung 5 gemeinsamen Höhe 29 angeordnet.

Hier ist das Minimum 42 als Öffnung ausgebildet, die eine in eine erste axiale Richtung 38 weisende Oberseite 39 und eine in eine der ersten axialen Richtung 38 entgegengesetzte zweite axiale Richtung 40 weisende Unterseite 41 der Ebenenplatte 1 miteinander verbindet.

Die Wandstärke 13 ändert sich in dem ersten Bereich 12, zumindest zwischen der Aufnahme 9 und dem Minimum 42, kontinuierlich.

Zumindest der erste Bereich 12 weist in dem ersten Querschnitt 10 eine erste Mittellinie 21 auf, wobei die erste Mittelinie 21 unter einem ersten Winkel 22 zur radialen Richtung 11 verläuft.

Die Ebenenplatte 1 weist in zumindest einer Mehrzahl von ersten Querschnitten 10 (hier ist nur der erste Querschnitt 10 gezeigt, der Aufnahme 9 und Anbindungen 34, 46 schneidet), die in einer Umfangsrichtung 18 zueinander versetzt verlaufen, zumindest einen ersten Bereich 12 zwischen der Aufnahme 9 und einer radialen Position, an der die Anbindung 34, 46 (z. B. in einem gegenüber diesem ersten Querschnitt 10 in Umfangsrichtung 18 versetzt angeordneten ersten Querschnitt 10) angeordnet ist, auf, in dem sich eine Wandstärke 13 ändert. Eine Formlinie der Aufnahme 9 verformt sich im Betrieb der Ebenenplatte 1 und bei Übertragung einer Presskraft um höchstens 0,05 Millimeter.

Das Minimum 42 stellt eine lokale Schwächung der Ebenenplatte 1 dar. Das Minimum 42 und/oder die sich ändernde Wandstärke 13 dienen der gezielten und gesteuerten Übertragung der in der Presse im Betrieb wirkenden Presskräfte. Diese Presskräfte wirken auf die Ebenenplatte 2 einerseits zumindest über die Aufnahme 9 (ausgehend von dem Stempel 6 bzw. Stempelhalter) und andererseits zumindest über die Anbindungen 34, 46 (ausgehend von den Hubzylindern 4, 47) ein.

Über das mindestens eine Minimum 42 und/oder die sich ändernde Wandstärke 13 wird ausgehend von den Anbindungen 34, 46 eine über die gesamte Aufnahme 9 gleichmäßig verteilte Kraftweiterleitung der Presskraft hin zum Stempelhalter bzw. zum Stempel 6 gewährleistet.

Die Aufnahme 9 weist im unbelasteten Zustand der Ebenenplatte 1 (Einbausituation der Ebenenplatte 1 in der Presse 3 bzw. im Adapter 51 bzw. im Adapterunterteil- oder -oberteil 52, 53; keine Einleitung einer Presskraft) eine Formlinie auf. Diese Formlinie hat gegenüber der axialen Richtung 5 und gegenüber der radialen Richtung 11 eine definierte Lage bzw. Position. Die Formlinie erstreckt sich in der Umfangsrichtung 18 umlaufend und beschreibt die Form der Aufnahme 9. Die Formlinie ist hier der innere Rand der Aufnahme 9.

Das mindestens eine Minimum 42 und/oder die sich ändernde Wandstärke 13 gewährleisten, dass bei der Aufnahme 9, bei Beaufschlagung der Ebenenplatte 1 mit der Presskraft, eine Abweichung von der Formlinie begrenzt bleibt.

Die erste Ebenenplatte 1 weist eine in eine erste axiale Richtung 38 weisende Oberseite 39 und eine in eine der ersten axialen Richtung 38 entgegengesetzte zweite axiale Richtung 40 weisende Unterseite 41 auf, wobei die mindestens eine Führungsfläche 7, 31 an der Oberseite 39 ein oberes Ende 43 aufweist; wobei die Anbindung 34 an der Oberseite 39 eine obere Anbindungsfläche 44 aufweist. Das obere Ende 43 und die obere Anbindungsfläche 44 sind auf voneinander gegenüber der axialen Richtung 5 unterschiedlichen Höhen 29 und damit in der axialen Richtung 5 voneinander beabstandet angeordnet (siehe Fig. 4).

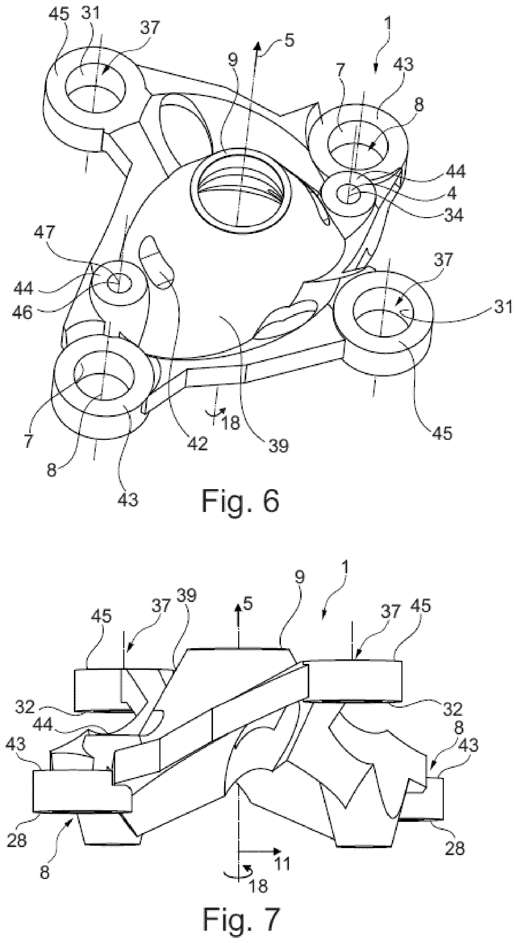

Die Fig. 6 zeigt eine Ebenenplatte 1 des Pressenwerkzeugs 2 nach Fig. 1 bis 5 in einer perspektivischen Ansicht. Die Fig. 7 zeigt die erste Ebenenplatte 1 nach Fig. 6 in einer weiteren perspektivischen Ansicht. Die Fig. 8 zeigt die erste Ebenenplatte 1 nach Fig. 6 und 7 in einer Seitenansicht im Schnitt VIII-VIII gemäß Fig. 9. Die Fig. 9 zeigt die erste Ebenenplatte 1 nach Fig. 6 bis 8 in einer Ansicht von oben entlang der axialen Richtung 5. Die Fig. 6 bis 9 werden im Folgenden gemeinsam beschrieben. Auf die Ausführungen zu Fig. 1 bis 5 wird Bezug genommen.

Die dargestellte Ebenenplatte 1 wird über zwei Hubzylinder 4, 47 betätigt, wobei die erste Ebenenplatte 1 jeweils eine Anbindung 34, 46 für jeden Hubzylinder 4, 47 aufweist. Die Hubzylinder 4, 47 sind so gegenüber der ersten Ebenenplatte 1 angeordnet, dass die erste Ebenenplatte 1 durch ein möglichst geringes Drehmoment um eine zur radialen Richtung 11 parallelen Achse beaufschlagt wird.

Die erste Ebenenplatte 1 weist vier Führungsflächen 7, 31 auf, die in einer Richtung senkrecht zur axialen Richtung 5 voneinander beabstandet angeordnet sind. Über die eine Führungsflächen 7, 31 kann die erste Ebenenplatte 1 entlang der axialen Richtung 5 durch die mindestens eine Führungssäule 8, 37 geführt werden, die sich entlang der axialen Richtung 5 erstreckt. Über die mindestens eine Führungssäule 8, 37 wird eine Verdrehung der erste Ebenenplatte 1 in einer Umfangsrichtung 18 und/oder eine Verkippung der Ebenenplatte 1 um eine entlang einer radialen Richtung 11 verlaufenden Achse/Richtung verringert bzw. verhindert.

Die Aufnahme 9 zur Kontaktierung des Stempels 6 oder eines Stempelhalters der Presse 3 ist zentral angeordnet, d. h. in einer Mitte der ersten Ebenenplatte 1, wenn diese entlang der axialen Richtung 5 betrachtet wird (siehe Fig. 9). Die Aufnahme 9 ist also zwischen einer Mehrzahl von Hubzylindern 4, 47 und einer Mehrzahl von Führungssäulen 8, 37 angeordnet, so dass die erste Ebenenplatte 1 bei einer Beaufschlagung der erste Ebenenplatte 1 mit einer Presskraft (entlang der axialen Richtung 5) durch ein möglichst geringes Drehmoment um eine zur radialen Richtung 11 parallelen Achse beaufschlagt wird.

Die Aufnahme 9 ist hier kreisrund ausgeführt und weist eine parallel zur axialen Richtung 5 verlaufende, zur Aufnahme 9 konzentrisch angeordnete Längsachse auf. Die radiale Richtung 11 erstreckt sich senkrecht zur axialen Richtung 5 und jeweils ausgehend von der Längsachse.

Die Aufnahme 9 weist eine Aufnahmefläche zur Kontaktierung und Abstützung des Stempels 6 bzw. Stempelhalters auf. Der Stempel 6 bzw. der Stempelhalter kann über eine Klemmplatte, eine Verschraubung, einen Bajonettverschluss oder ähnliches an der Aufnahme 9 befestigt werden (siehe Fig. 7).

Weiter weist die erste Ebenenplatte 1 mindestens vier zylindrische Führungsflächen 7, 31 zur Kontaktierung jeweils einer Führungssäule 8, 37 auf, wobei eine zylindrische erste Führungsfläche 7 ein erstes unteres Ende 28 und eine zylindrische zweite Führungsfläche 31 ein zweites unteres Ende 32 aufweist, wobei das erste untere Ende 28 und das zweite untere Ende 32 auf voneinander gegenüber der axialen Richtung 5 unterschiedlichen Höhen 29 angeordnet sind.

Die unteren Enden 28, 32 sind an einer Unterseite 41 der ersten Ebenenplatte 1 angeordnet. Die unteren Enden 28, 32 von jeweils zwei zylindrischen Führungsflächen 7, 31 einer ersten Ebenenplatte 1 sind auf einer gemeinsamen Höhe 29 angeordnet. Die zwei zylindrischen Führungsflächen 7, 31 mit den auf der gemeinsamen Höhe 29 angeordneten unteren Enden 28, 32 sind in einer Umfangsrichtung 18 um 180 Winkelgrad versetzt zueinander angeordnet.

Die erste Ebenenplatte 1 weist mindestens zwei zylindrische Führungsflächen 7, 31 zur Kontaktierung jeweils einer Führungssäule 8, 37 auf, wobei eine erste zylindrische Führungsfläche 7 ein erstes unteres Ende 28 und ein erstes oberes Ende 43 aufweist und eine zweite zylindrische Führungsfläche 31 ein zweites unteres Ende 32 und ein zweites oberes Ende 45 aufweist, wobei das erste untere Ende 28 gegenüber der axialen Richtung 5 unterhalb von dem zweiten unteren Ende 32 auf einer unterschiedlichen Höhe 29 angeordnet ist und wobei das erste obere Ende 43 gegenüber der axialen Richtung 5 unterhalb von dem zweiten oberen Ende 45 auf einer unterschiedlichen Höhe 29 angeordnet ist.

Die erste Führungsfläche 7 weist an der Oberseite 39 der Ebenenplatte 1 ein erstes oberes Ende 43 auf, wobei das erste untere Ende 28 und das erste obere Ende 43 auf voneinander gegenüber der axialen Richtung 5 unterschiedlichen Höhen 29 und damit in der axialen Richtung 5 in einer Distanz voneinander beabstandet angeordnet sind. Das erste untere Ende 28 und das zweite untere Ende 32 sind in der axialen Richtung 5 um ca. 250 % der Distanz voneinander beabstandet angeordnet.

Die Anbindung 34 an der Oberseite 39 weist eine obere Anbindungsfläche 44 auf. Das erste obere Ende 43 und die obere Anbindungsfläche 44 sind auf voneinander gegenüber der axialen Richtung 5 unterschiedlichen Höhen 29 und damit in der axialen Richtung 5 voneinander beabstandet angeordnet.

Die obere Anbindungsfläche 44 ist entlang der axialen Richtung 5 zwischen dem ersten oberen Ende 43 und dem zweiten oberen Ende 45 auf einer gegenüber der axialen Richtung 5 unterschiedlichen Höhe 29 angeordnet.

Die obere Anbindungsfläche 44 ist entlang der axialen Richtung 5 zwischen dem ersten oberen Ende 43 und dem zweiten unteren Ende 32 auf einer gegenüber der axialen Richtung 5 unterschiedlichen Höhe 29 angeordnet.

Wie schon im Zusammenhang mit Fig. 5 erläutert, zeigt hier die Fig. 8 einen anderen ersten Querschnitt 10, der zum ersten Querschnitt gemäß Fig. 5 in einer Umfangsrichtung 18 versetzt verläuft. In einem ersten Bereich 12 zwischen der Aufnahme 9 und einer radialen Position, an der die Anbindung 34, 46 (z. B. in einem gegenüber diesem ersten Querschnitt 10 in Umfangsrichtung 18 versetzt angeordneten ersten Querschnitt 10, siehe Fig. 5) angeordnet ist, ändert sich eine Wandstärke 13. Eine Verformung der Formlinie der Aufnahme 9 im Betrieb der Ebenenplatte 1 und bei Übertragung einer Presskraft wird durch die besondere Gestaltung der Ebenenplatte begrenzt.

Die Aufnahme 9 ist, wie oben beschrieben, kreisrund ausgeführt und weist eine parallel zur axialen Richtung 5 verlaufende, zur Aufnahme 9 konzentrisch angeordnete Längsachse auf, wobei die Anbindungen 34, 46 an identischen radialen Positionen entlang der radialen Richtungen 11 angeordnet sind. Die ersten Bereiche 12 der ersten Querschnitte 10 sind also zwischen der Aufnahme 9 und innerhalb eines Radius (radiale Position) um die Längsachse angeordnet (siehe gestrichelt ausgeführter Kreis mit Radius, der der radialen Position entspricht in Fig. 9).

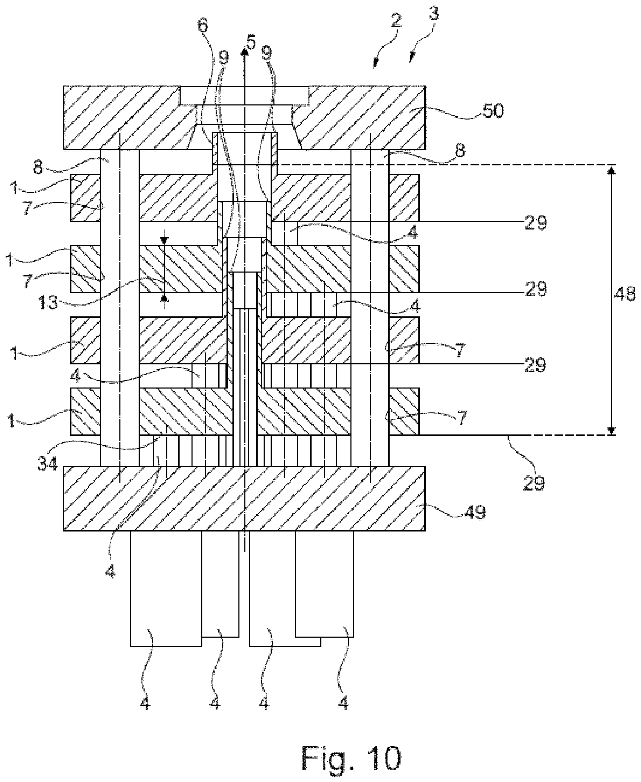

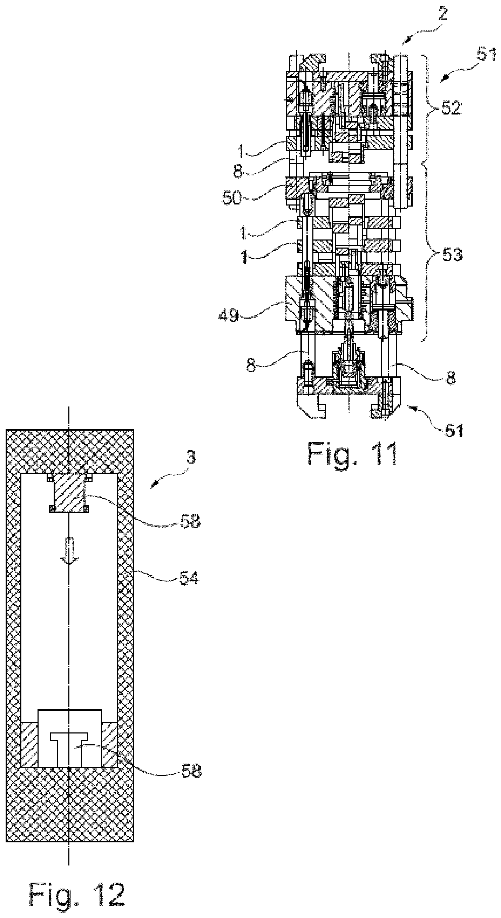

Fig. 10 zeigt ein bekanntes Pressenwerkzeug 2 in einer Seitenansicht im Schnitt. Das Pressenwerkzeug 2 ist ein Adapterunterteil 53 eines Adapters 51 einer Presse 3 (siehe Fig. 11 und 12) Das Pressenwerkzeug 2 umfasst vier Ebenenplatten 1, die entlang der axialen Richtung 5 übereinander angeordnet sind. Jede der vier Ebenenplatten 1 wird durch zwei Hubzylinder 4 entlang der axialen Richtung 5 verlagert. Jede Ebenenplatte 1 weist also zwei Anbindungen 34 auf. Weiter sind vier Führungssäulen 8 vorgesehen, wobei jede Ebenenplatte 1 jeweils vier zylindrische Führungsflächen 7 an der Führungssäule 8 zur Kontaktierung der für die Ebenenplatten 1 gemeinsamen Führungssäulen 8 aufweist. Weiter weist jede Ebenenplatte 1 jeweils eine zentral angeordnete Aufnahme 9 zur Kontaktierung des Stempels 6 (vgl. Fig. 8) oder eines Stempelhalters (hier ebenfalls durch den Stempel 6 symbolisiert) der Presse 3 auf. Die Ebenenplatten 1 sind entlang einer axialen Richtung 5 übereinander angeordnet, so dass die Führungsflächen 7 jeder Ebenenplatte 1 jeweils koaxial zu den korrespondierenden Führungsflächen 7 der anderen Ebenenplatten 1 angeordnet sind.

Das Pressenwerkzeug 2 umfasst hier weiter eine Grundplatte 49 und eine Matrizenaufnahmeplatte 50, zwischen denen sich die Führungssäulen 8 erstrecken und die Ebenenplatten 1 angeordnet sind.

Bei dem bekannten Pressenwerkzeug 2 sind die einzelnen Ebenenplatten 1 in der axialen Richtung 5 voneinander beabstandet und übereinander angeordnet, d. h. sie sind dauerhaft auf verschiedenen Höhen 29 (Niveaus) entlang der axialen Richtung 5 angeordnet. Die Ebenenplatte 1 erstreckt sich zwischen der zentral angeordneten Aufnahme 9 für den Stempelhalter oder den Stempel 6 entlang der radialen Richtung 1 zumindest bis zu einer zylindrischen Führungsfläche 7, die zur Kontaktierung einer der Führungssäulen 8 vorgesehen ist.

Die Ebenenplatten 1 sind im dargestellten Querschnitt rechteckig geformt und weisen eine konstante Wandstärke 13 auf. Die Aufnahme 9 ist hier zylindrisch ausgeführt und erstreckt sich ausgehend von der Ebenenplatte 1 entlang der axialen Richtung 5. Dabei sind die Aufnahmen 9 der unteren Ebenenplatten 1 jeweils länger ausgeführt als die Aufnahme 1 der benachbart angeordneten Ebenenplatte 1. Die Querschnittsänderung liegt nicht im Bereich zwischen den Führungsflächen 7 an den Führungssäulen 8 und der zentralen Aufnahme 9 und verläuft auch nicht kontinuierlich entlang einer Erstreckung sondern ist nur an jeweils einer konkreten Position vorgesehen, nämlich an der Aufnahme 9. Die Querschnittsänderung wird jeweils durch parallel zur axialen Richtung 5 verlaufende Seitenwände gebildet.

Fig. 11 zeigt einen bekannten Adapter 51 für eine Presse 3 in einer Seitenansicht im Schnitt. Der Adapter 51 umfasst ein Adapteroberteil 52 sowie ein Adapterunterteil 53 (ähnlich wie das Adapterunterteil 53 nach Fig. 10) mit Ebenenplatten 1, Grundplatte 49 und Matrizenaufnahmeplatte 50. Auf die Ausführungen zu Fig. 10 wird Bezug genommen.

Fig. 12 zeigt einen bekannten Pressenrahmen 54 zur Aufnahme eines Adapters 51, z. B. des Adapters 51 nach Fig. 11. Der Adapter 51 stützt sich am Pressenrahmen 54 ab.

Pressenrahmen 54 und Adapter 51 mit den vorstehend genannten Komponenten bilden eine Presse 3. Der Pressenrahmen 54 weist zwei Kupplungen 58 zur Aufnahme der Adapter 51 auf.

Der Aufbau der bekannten Presse 3 bzw. des Pressenwerkzeugs 2 (also zumindest des Adapterunterteils 53) gemäß den Fig. 10 bis 12 weist eine große Bauhöhe 48 in der axialen Richtung 5 auf. Dabei erstrecken sich ausgehend von der Matrizenaufnahmeplatte 50 für jede Werkzeugebene, die auch die jeweilige Ebenenplatte 1 umfasst, die einzelnen Komponenten der betreffenden Werkzeugebene (also Stempel 6, ggf. zugehöriger Stempelhalter, Aufnahme 9) entlang der axialen Richtung 5 unterschiedlich weit, so dass unterschiedliche Elastizitäten für jede Werkzeugebene vorliegen. Infolge der unterschiedlichen Elastizitäten kann gerade ein Entformen des herzustellenden Grünlings durch die unterschiedliche Ausdehnung der Komponenten zwischen verschiedenen Werkzeugebenen bei der Entspannung der Werkzeugebenen (Presskraft wird zurückgefahren) problematisch sein, wobei Rissbildungen in dem Grünling auftreten können.

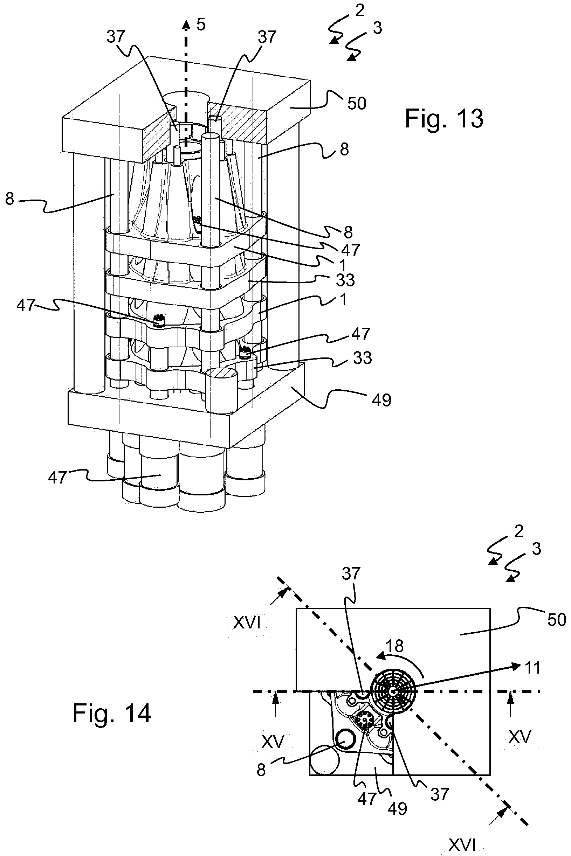

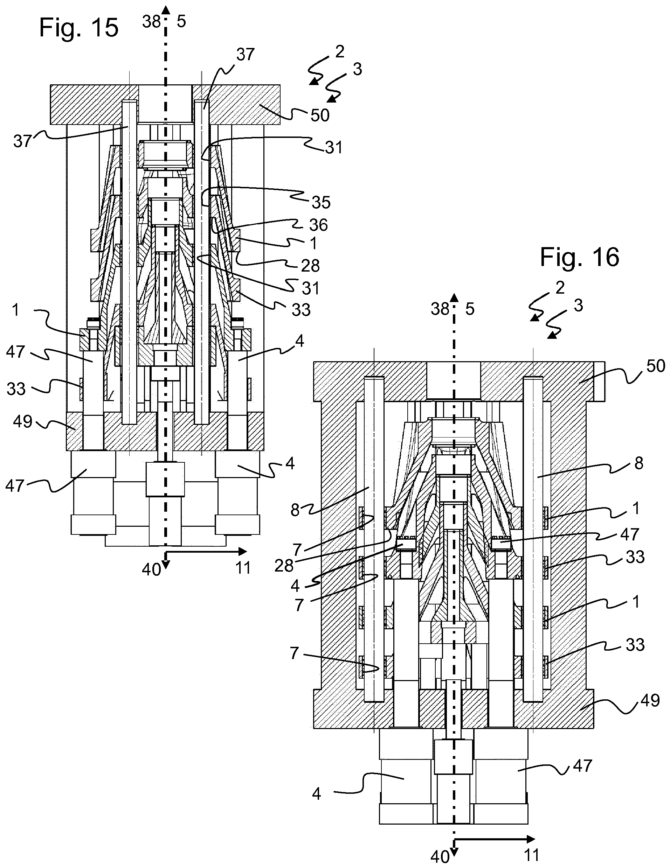

Fig. 13 zeigt ein weiteres Ausführungsbeispiel eines Pressenwerkzeugs 2 einer Presse 3 in einer perspektivischen Ansicht, teilweise im Schnitt. Fig. 14 zeigt das Pressenwerkzeug 2 nach Fig. 13 in einer Ansicht von oben entlang der axialen Richtung 5. In der Fig. 14 sind die Verläufe der Schnittlinien XV-XV und XVI-XVI dargestellt. Fig. 15 zeigt eine Seitenansicht des Pressenwerkzeugs 2 nach Fig. 13 und 14 im Schnitt XV-XV gemäß Fig. 14. Fig. 16 zeigt das Pressenwerkzeug 2 nach Fig. 13 bis 15 in einer Seitenansicht in einem weiteren Schnitt XVI-XVI gemäß Fig. 14. Die Fig. 13 bis 16 werden im Folgenden gemeinsam beschrieben. Auf die Ausführungen zu den Fig. 1 bis 5 wird Bezug genommen.

Im Unterschied zum Pressenwerkzeug 2 bzw. der Presse 3 nach Fig. 1 bis 5 weist das Pressenwerkzeug 2 hier acht (8) Führungssäulen 8, 37 auf, nämlich vier (4) erste Führungssäulen 8 und vier (4) zweite Führungssäulen 37.

Die Führungssäulen 8, 37 erstrecken sich jeweils von der Grundplatte 49 bis zur Matrizenaufnahmeplatte 50.

Weiter weist jede Ebenenplatte 1, 33 jeweils zwei (2) Hubzylinder 4, 47 auf. Jeder Hubzylinder 4, 47 erstreckt sich durch die Grundplatte 49 hindurch entlang der axialen Richtung 5 bis hin zur einer Anbindung 34, 46 an der Ebenenplatte 1, 33. Erkennbar sind die Anbindungen 34, 46 der Hubzylinder 4, 47 an einer Ebenenplatte jeweils auf einer gleichen Höhe 29 angeordnet.

Die Ebenenplatten 1, 33 des Pressenwerkzeugs 2 weisen jeweils acht zylindrische Führungsflächen 7, 31, 35 zur Kontaktierung von acht für die Ebenenplatten 1, 33 gemeinsamen Führungssäulen 8, 37 auf. Eine erste Ebenenplatte 1 weist eine erste Führungsfläche 7 mit einem ersten unteren Ende 28 und die zweite Ebenenplatte 33 eine dritte Führungsfläche 35 mit einem dritten unteren Ende 36 auf. Die erste Ebenenplatte 1 ist gegenüber der axialen Richtung 5 oberhalb von der zweiten Ebenenplatte 33 anordenbar und die Ebenenplatten 1, 33 sind dabei so zueinander anordenbar, dass die erste Führungsfläche 7 eine erste Führungssäule 8 der gemeinsamen Führungssäulen 8, 37 und die dritte Führungsfläche 35 eine (andere, also) zweite Führungssäule 37 der gemeinsamen Führungssäulen 8, 37 kontaktiert. Dabei ist das erste untere Ende 28 gegenüber der axialen Richtung 5 unterhalb des dritten unteren Endes 36 angeordnet (siehe Fig. 15 und 16).

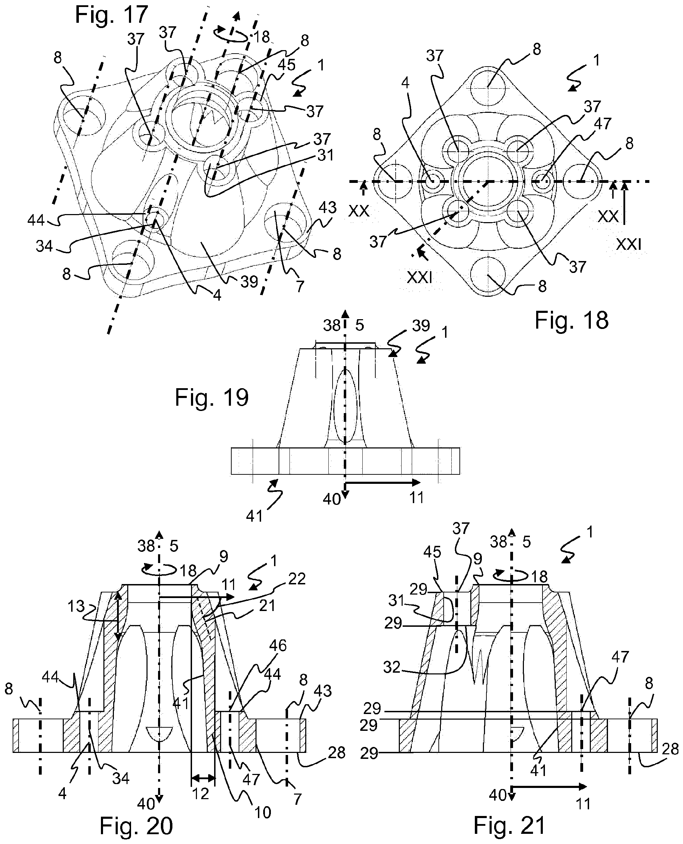

Fig. 17 zeigt eine Ebenenplatte 1 des Pressenwerkzeugs 2 nach Fig. 13 bis 16 in einer perspektivischen Ansicht. Fig. 18 zeigt die Ebenenplatte 1 nach Fig. 17 in einer Ansicht von oben entlang der axialen Richtung 5. Fig. 19 zeigt die Ebenenplatte 1 nach Fig. 17 und 18 in einer Seitenansicht. Fig. 20 zeigt die Ebenenplatte 1 nach Fig. 17 bis 19 in einer Seitenansicht im Schnitt XX-XX gemäß Fig. 18. Fig. 21 zeigt die Ebenenplatte 1 nach Fig. 17 bis 20 in einer Seitenansicht im Schnitt XXI-XXI gemäß Fig. 18. Die Fig. 17 bis 21 werden im Folgenden gemeinsam beschrieben. Auf die Ausführungen zu den Fig. 13 bis 16 sowie 6 bis 9 wird Bezug genommen.

Die dargestellte Ebenenplatte 1 wird über zwei Hubzylinder 4, 47 betätigt, wobei die erste Ebenenplatte 1 jeweils eine Anbindung 34, 46 für jeden Hubzylinder 4, 47 aufweist.

Weiter weist die Ebenenplatte 1 acht zylindrische Führungsflächen 7, 31 auf, wobei jede Führungsfläche 7, 31 jeweils eine Führungssäule 8, 37 kontaktiert, wobei eine zylindrische erste Führungsfläche 7 ein erstes unteres Ende 28 und eine zylindrische zweite Führungsfläche 31 ein zweites unteres Ende 32 (siehe Fig. 21) aufweist, wobei das erste untere Ende 28 und das zweite untere Ende 32 auf voneinander gegenüber der axialen Richtung 5 unterschiedlichen Höhen 29 angeordnet sind.

Die unteren Enden 28, 32 sind an einer Unterseite 41 der Ebenenplatte 1 angeordnet. Hier sind alle vier (4) ersten unteren Enden 28 der ersten Führungsflächen 7 auf jeweils einer gemeinsamen Höhe angeordnet. Weiter sind alle vier (4) zweiten unteren Enden 32 der zweiten Führungsflächen auf jeweils einer gemeinsamen Höhe angeordnet. Die ersten zylindrischen Führungsflächen 7 mit den auf der gemeinsamen Höhe 29 angeordneten ersten unteren Enden 28 sind in einer Umfangsrichtung 18 um 90 Winkelgrad versetzt zueinander angeordnet (die zweiten Führungsflächen 31 gleichfalls; und dabei in einer Umfangsrichtung 18 um 45 Winkelgrad versetzt zu den ersten Führungsflächen 7).

Die erste Ebenenplatte 1 weist acht zylindrische Führungsflächen 7, 31 auf, wobei erste Führungsflächen 7 erste Führungssäulen 8 und zweite Führungsflächen 31 zweite Führungssäulen 37 kontaktieren. Erste zylindrische Führungsflächen 7 weisen jeweils ein erstes unteres Ende 28 und ein erstes oberes Ende 43 auf, wobei zweite zylindrische Führungsflächen 31 jeweils ein zweites unteres Ende 32 und ein zweites oberes Ende 45 aufweisen. Das erste untere Ende 28 ist gegenüber der axialen Richtung 5 unterhalb von dem zweiten unteren Ende 32 auf einer unterschiedlichen Höhe 29 angeordnet. Das erste obere Ende 43 ist gegenüber der axialen Richtung 5 unterhalb von dem zweiten oberen Ende 45 auf einer unterschiedlichen Höhe 29 angeordnet.

Die erste Anbindung 34 und die zweite Anbindung 46 weist an der Oberseite 39 weist eine obere Anbindungsfläche 44 auf. Das erste obere Ende 43 und die obere Anbindungsfläche 44 sind auf voneinander gegenüber der axialen Richtung 5 unterschiedlichen Höhen 29 und damit in der axialen Richtung 5 voneinander beabstandet angeordnet.

Die obere Anbindungsfläche 44 ist entlang der axialen Richtung 5 zwischen dem ersten oberen Ende 43 und dem zweiten oberen Ende 45 auf einer gegenüber der axialen Richtung 5 unterschiedlichen Höhe 29 angeordnet.

Die obere Anbindungsfläche 44 ist entlang der axialen Richtung 5 zwischen dem ersten oberen Ende 43 und dem zweiten unteren Ende 32 auf einer gegenüber der axialen Richtung 5 unterschiedlichen Höhe 29 angeordnet.

Die Ebenenplatte 1 weist in zumindest einem ersten Querschnitt 10 (z. B. dargestellt in Fig. 20), der parallel zur axialen Richtung 5 und entlang einer zur axialen Richtung 5 senkrecht verlaufenden radialen Richtung 11 zwischen der Aufnahme 9 und der ersten Führungsfläche 7 verläuft, zumindest einen ersten Bereich 12 auf, in dem sich eine Wandstärke 13 der Ebenenplatte 1 kontinuierlich ändert. Dabei wird die Wandstärke 13 in einer Richtung parallel zur axialen Richtung 5 ermittelt.

Diese Wandstärke 13 ändert sich kontinuierlich, d. h. an jeder zueinander benachbarten Position entlang der radialen Richtung 11 weist der erste Bereich 12 eine jeweils andere Wandstärke 13 auf.

Der erste Bereich 12 weist in dem ersten Querschnitt 10 eine erste Mittellinie 21 auf, wobei die erste Mittelinie 21 unter einem ersten Winkel 22 zur radialen Richtung 11 verläuft. Die erste Mittellinie 21 wird durch die Mittelpunkte der, an der jeweiligen radialen Position vorliegenden Wandstärke 13 gebildet.

### Bezugszeichenliste

- 1: erste Ebenenplatte
- 2: Pressenwerkzeug
- 3: Presse
- 4: (erster) Hubzylinder
- 5: axiale Richtung
- 6: Stempel
- 7: (erste) Führungsfläche
- 8: Führungssäule
- 9: Aufnahme
- 10: erster Querschnitt
- 11: radiale Richtung
- 12: erster Bereich
- 13: Wandstärke
- 14: erste Erstreckung
- 15: Abstand
- 16: zweiter Querschnitt
- 17: Winkelbereich
- 18: Umfangsrichtung
- 19: zweiter Bereich
- 20: zweite Erstreckung
- 21: erste Mittelinie
- 22: erster Winkel
- 23: zweite Mittellinie
- 24: zweiter Winkel
- 25: dritter Bereich
- 26: dritte Mittellinie
- 27: dritter Winkel
- 28: (erstes) unteres Ende
- 29: Höhe
- 30: Wendebereich
- 31: zweite Führungsfläche
- 32: zweites unteres Ende
- 33: zweite Ebenenplatte
- 34: (erste) Anbindung
- 35: dritte Führungsfläche
- 36: drittes unteres Ende
- 37: zweite Führungssäule
- 38: erste axiale Richtung
- 39: Oberseite
- 40: zweite axiale Richtung
- 41: Unterseite
- 42: Minimum
- 43: (erstes) oberes Ende
- 44: obere Anbindungsfläche
- 45: zweites oberes Ende
- 46: zweite Anbindung
- 47: zweiter Hubzylinder
- 48: Bauhöhe
- 49: Grundplatte
- 50: Matrizenaufnahmeplatte
- 51: Adapter
- 52: Adapteroberteil
- 53: Adapterunterteil
- 54: Pressenrahmen
- 58: Kupplung

## Patentansprüche

1. Ebenenplatte (1) für ein Pressenwerkzeug (2) einer Presse (3); wobei die Ebenenplatte (1) über mindestens einen Hubzylinder (4) entlang einer axialen Richtung (5) zur Betätigung eines Stempels (6) der Presse (3) verfahrbar ist; wobei die Ebenenplatte (1) eine Anbindung (34) für den mindestens einen Hubzylinder (4), mindestens eine zur axialen Richtung (5) parallele zumindest teilweise zylindrische Führungsfläche (7, 31) zur Kontaktierung einer Führungssäule (8, 37) und eine zentral angeordnete Aufnahme (9) zur Kontaktierung des Stempels (6) oder des Stempelhalters der Presse (3) aufweist; wobei die Ebenenplatte (1) in zumindest einem ersten Querschnitt (10), der parallel zur axialen Richtung (5) und entlang einer zur axialen Richtung (5) senkrecht verlaufenden radialen Richtung (11) durch die Anbindung (34) und die Aufnahme (9) verläuft, zumindest einen ersten Bereich (12) zwischen der Anbindung (34) und der Aufnahme (9) mit einer Wandstärke (13) aufweist, **dadurch gekennzeichnet, dass** sich die Wandstärke (13) in dem ersten Bereich (12) zumindest zwischen der Aufnahme (9) und dem Minimum (42) kontinuierlich ändert und die Wandstärke (13) in dem ersten Bereich (12) und beabstandet von der Aufnahme (9) sowie von der Anbindung (34) zumindest ein Minimum (42) aufweist.

2. Ebenenplatte (1) nach Patentanspruch 1, wobei das Minimum (42) als Öffnung ausgebildet ist, die eine in eine erste axiale Richtung (38) weisende Oberseite (39) und eine in eine der ersten axialen Richtung (38) entgegengesetzte zweite axiale Richtung (40) weisende Unterseite (41) der Ebenenplatte (1) miteinander verbindet.

3. Ebenenplatte (1) nach einem der vorhergehenden Patentansprüche, wobei zumindest der erste Bereich (12) in dem ersten Querschnitt (10) eine erste Mittellinie (21) der Wandstärke (13) aufweist, wobei die erste Mittellinie (21) unter einem ersten Winkel (22) von mindestens 10 Winkelgrad zur radialen Richtung (11) verläuft.

4. Ebenenplatte (1) nach einem der vorhergehenden Patentansprüche, wobei die Ebenenplatte (1) eine in eine erste axiale Richtung (38) weisende Oberseite (39) und eine in eine der ersten axialen Richtung (38) entgegengesetzte zweite axiale Richtung (40) weisende Unterseite (41) aufweist; wobei die mindestens eine Führungsfläche (7, 31) an der Oberseite (39) ein oberes Ende (43, 45) aufweist; wobei die Anbindung (34, 46) an der Oberseite (39) eine obere Anbindungsfläche (44) aufweist; wobei das obere Ende (43, 45) und die obere Anbindungsfläche (44) auf voneinander gegenüber der axialen Richtung (5) unterschiedlichen Höhen (29) und damit in der axialen Richtung (5) voneinander beabstandet angeordnet sind.

5. Ebenenplatte (1) nach Patentanspruch 4, wobei die Ebenenplatte (1) mindestens zwei zumindest teilweise zylindrische Führungsflächen (7, 31) zur Kontaktierung jeweils einer Führungssäule (8, 37) aufweist, wobei eine erste zumindest teilweise zylindrische Führungsfläche (7) ein erstes unteres Ende (28) und ein erstes oberes Ende (43) aufweist und eine zweite zumindest teilweise zylindrische Führungsfläche (31) ein zweites unteres Ende (32) und ein zweites oberes Ende (45) aufweist, wobei das erste untere Ende (28) gegenüber der axialen Richtung (5) unterhalb von dem zweiten unteren Ende (32) auf einer unterschiedlichen Höhe (29) angeordnet ist und wobei das erste obere Ende (43) gegenüber der axialen Richtung (5) unterhalb von dem zweiten oberen Ende (45) auf einer unterschiedlichen Höhe (29) angeordnet ist.

6. Ebenenplatte (1) nach Patentanspruch 5, wobei die obere Anbindungsfläche (44) entlang der axialen Richtung (5) zwischen dem ersten oberen Ende (43) und dem zweiten oberen Ende (45) auf einer gegenüber der axialen Richtung (5) unterschiedlichen Höhe (29) angeordnet ist.

7. Ebenenplatte (1) nach Patentanspruch 6, wobei die obere Anbindungsfläche (44) entlang der axialen Richtung (5) zwischen dem ersten oberen Ende (43) und dem zweiten unteren Ende (32) auf einer gegenüber der axialen Richtung (5) unterschiedlichen Höhe (29) angeordnet ist.

8. Ebenenplatte (1) nach einem der vorhergehenden Patentansprüche, wobei die Ebenenplatte (1) über mindestens zwei Hubzylinder (4, 47) entlang einer axialen Richtung (5) zur Betätigung des Stempels (6) der Presse (3) verfahrbar ist; wobei die Ebenenplatte (1) eine erste Anbindung (34) für einen ersten Hubzylinder (4) und eine zweite Anbindung (46) für einen zweiten Hubzylinder (47) aufweist; wobei die Anbindungen (34, 46) auf einer gegenüber der axialen Richtung (5) gemeinsamen Höhe (29) angeordnet sind.

9. Ebenenplatte (1) nach einem der vorhergehenden Patentansprüche, wobei die Ebenenplatte (1) über mindestens zwei Hubzylinder (4, 47) entlang einer axialen Richtung (5) zur Betätigung des Stempels (6) der Presse (3) verfahrbar ist; wobei die Ebenenplatte (1) eine erste Anbindung (34) für einen ersten Hubzylinder (4) und eine zweite Anbindung (46) für einen zweiten Hubzylinder (47) aufweist; wobei die Anbindungen (34, 46) auf voneinander gegenüber der axialen Richtung (5) unterschiedlichen Höhen (29) angeordnet sind.

10. Pressenwerkzeug (2) für eine Presse (3), zumindest umfassend eine erste Ebenenplatte (1) und eine zweite Ebenenplatte (33), wobei zumindest die erste Ebenenplatte (1) über mindestens einen Hubzylinder (4) entlang einer axialen Richtung (5) zur Betätigung eines Stempels (6) der Presse (3) verfahrbar ist; wobei zumindest die erste Ebenenplatte (1) eine Anbindung (34) für den mindestens einen Hubzylinder (4) aufweist, wobei jede Ebenenplatte (1, 33) jeweils mindestens eine zumindest teilweise zylindrische Führungsfläche (7, 31) zur Kontaktierung einer für die Ebenenplatten (1) gemeinsamen Führungssäule (8, 37) und jeweils eine zentral angeordnete Aufnahme (9) zur Kontaktierung des Stempels (6) oder eines Stempelhalters der Presse (3) aufweist; wobei die Ebenenplatten (1, 33) entlang einer axialen Richtung (5) übereinander anordenbar sind, so dass die jeweils mindestens eine Führungsfläche (7, 31) jeder Ebenenplatte (1, 33) koaxial zueinander angeordnet sind; wobei zumindest die erste Ebenenplatte (1) eine Ebenenplatte (1) nach einem der vorhergehenden Patentansprüche ist; wobei die Ebenenplatten (1, 33) entlang der axialen Richtung (5) und entlang der radialen Richtung (11) zumindest teilweise einander überlappend anordenbar sind.

11. Pressenwerkzeug (2) nach Patentanspruch 10, wobei die Ebenenplatten (1, 33) jeweils mindestens zwei zumindest teilweise zylindrische Führungsflächen (7, 31, 35) zur Kontaktierung von zwei für die Ebenenplatten (1, 33) gemeinsamen Führungssäulen (8, 37) aufweisen; wobei die erste Ebenenplatte (1) eine erste zumindest teilweise zylindrische Führungsfläche (7) mit einem ersten unteren Ende (28) und die zweite Ebenenplatte (33) eine dritte zumindest teilweise zylindrische Führungsfläche (35) mit einem dritten unteren Ende (36) aufweist, wobei die erste Ebenenplatte (1) gegenüber der axialen Richtung (5) oberhalb von der zweiten Ebenenplatte (33) anordenbar ist und die Ebenenplatten (1, 33) dabei so zueinander anordenbar sind, dass die erste Führungsfläche (7) eine erste Führungssäule (8) der gemeinsamen Führungssäulen (8, 37) und die dritte Führungsfläche (35) eine zweite Führungssäule (37) der gemeinsamen Führungssäulen (8, 37) kontaktiert; wobei dabei das erste untere Ende (28) gegenüber der axialen Richtung (5) unterhalb des dritten unteren Endes (36) angeordnet ist.

12. Verwendung einer Ebenenplatte (1) in einem Pressenwerkzeug (2) einer Presse (3) zur Herstellung eines Grünlings; wobei die Ebenenplatte (1) über mindestens einen Hubzylinder (4) entlang einer axialen Richtung (5) zur Betätigung eines Stempels (6) der Presse (3) verfahrbar ist; wobei die Ebenenplatte (1) eine Anbindung (34) für den mindestens einen Hubzylinder (4), mindestens eine zur axialen Richtung (5) parallele zumindest teilweise zylindrische Führungsfläche (7, 31) zur Kontaktierung einer Führungssäule (8, 37) und eine zentral angeordnete Aufnahme (9) zur Kontaktierung des Stempels (6) oder eines Stempelhalters der Presse (3) aufweist; wobei die Ebenenplatte (1) in zumindest einem ersten Querschnitt (10), der parallel zur axialen Richtung (5) und entlang einer zur axialen Richtung (5) senkrecht verlaufenden radialen Richtung (11) durch die Anbindung (34) und die Aufnahme (9) verläuft, zumindest einen ersten Bereich (12) zwischen der Anbindung (34) und der Aufnahme (9) mit einer Wandstärke (13) aufweist, **dadurch gekennzeichnet, dass** sich die Wandstärke (13) in dem ersten Bereich (12) zumindest zwischen der Aufnahme (9) und dem Minimum (42) kontinuierlich ändert und die Wandstärke (13) in dem ersten Bereich (12) und beabstandet von der Aufnahme (9) sowie von der Anbindung (34) zumindest ein Minimum (42) aufweist.

## Claims

1. Plane plate (1) for a pressing tool (2) of a press (3), wherein the plane plate (1) for activating a punch (6) of the press (3) by way of at least one lifting cylinder (4) is displaceable along an axial direction (5); wherein the plane plate (1) has a link (34) to the at least one lifting cylinder (4), at least one at least partially cylindrical guiding face (7, 31) which for contacting a guide column (8, 37) is parallel with the axial direction (5), and a centrally disposed receptacle (9) for contacting the punch (6) or the punch holder of the press (3); wherein the plane plate (1) at least in a first cross section (10), the first cross section (10) running parallel to the axial direction (5) and along a radial direction (11), that runs so as to be perpendicular to the axial direction (5), through the link (34) and the receptacle (9), between the link (34) and the receptacle (9) has at least a first region (12) having a wall thickness (13), **characterized in that** the wall thickness (13) in the first region (12) at least between the link (34) and the minimum (42) varies continuously and the wall thickness (13) in the first region (12) and so as to be spaced apart from the receptacle (9) as well as from the link (34) has at least a minimum (42).

2. Plane plate (1) as claimed in claim 1, wherein the minimum (42) is configured as an opening which connects to one another an upper side (39) of the plane plate (1) that points in a first axial direction (38) and a lower side (41) of the plane plate (1) that points in a second axial direction (40) counter to the first axial direction (38).

3. Plane plate (1) as claimed in one of the preceding claims, wherein at least the first region (12) in the first cross section (10) has a first centerline (21) of the wall thickness (13), wherein the first centerline (21) in relation to the radial direction (11) runs at a first angle (22) of at least 10 angular degrees.

4. Plane plate (1) as claimed in one of the preceding claims, wherein the plane plate (1) has an upper side (39) that points in a first axial direction (38), and a lower side (41) that points in a second axial direction (40), counter to the first axial direction (38); wherein the at least one guiding face (7, 31) on the upper side (39) has an upper end (43, 45); wherein the link (34, 46) on the upper side (39) has an upper linking face (44); wherein the upper end (43, 45) and the upper linking face (44) are disposed at dissimilar heights (29) in relation to the axial direction (5) and thus are disposed so as to be mutually spaced apart in the axial direction (5).

5. Plane plate (1) as claimed in claim 4, wherein the plane plate (1) for contacting in each case one guide column (8, 37) has at least two at least partially cylindrical guiding faces (7, 31), wherein a first at least partially cylindrical guiding face (7) has a first lower end (28) and a first upper end (43), and a second at least partially cylindrical guiding face (31) has a second lower end (32) and a second upper end (45), wherein the first lower end (28) in relation to the axial direction (5) is disposed at a different height (29) below the second lower end (32), and wherein the first upper end (43) in relation to the axial direction (5) is disposed at a different height (29) below the second upper end (45).

6. Plane plate (1) as claimed in claim 5, wherein the upper linking face (44) along the axial direction (5), between the first upper end (43) and the second upper end (45), is disposed at a different height (29) in relation to the axial direction (5).

7. Plane plate (1) as claimed in claim 6, wherein the upper linking face (44) along the axial direction (5), between the first upper end (43) and the second lower end (32), is disposed at a different height (29) in relation to the axial direction (5).

8. Plane plate (1) as claimed in one of the preceding claims, wherein the plane plate (1) for activating the punch (6) of the press (3) by way of at least two lifting cylinders (4, 47) is displaceable along an axial direction (5); wherein the plane plate (1) has a first link (34) to a first lifting cylinder (4) and a second link (46) to a second lifting cylinder (47); wherein the links (34, 46) are disposed at a common height (29) in relation to the axial direction (5).

9. Plane plate (1) as claimed in one of the preceding claims, wherein the plane plate (1) for activating the punch (6) of the press (3) by way of at least two lifting cylinders (4, 47) is displaceable along an axial direction (5); wherein the plane plate (1) has a first link (34) to a first lifting cylinder (4) and a second link (46) to a second lifting cylinder (47); wherein the links (34, 46) are disposed at dissimilar heights (29) in relation to the axial direction (5).

10. Pressing tool (2) for a press (3), at least comprising a first plane plate (1) and a second plane plate (33), wherein at least the first plane plate (1) for activating a punch (6) of the press (3) by way of at least one lifting cylinder (4) is displaceable along an axial direction (5); wherein at least the first plane plate (1) has a link (34) to the at least one lifting cylinder (4), wherein each plane plate (1, 33) for contacting a guide column (8, 37) that is common to the plane plates (1) has in each case at least one at least partially cylindrical guiding face (7, 31), and for contacting the punch (6) or a punch holder of the press (3) has in each case one centrally disposed receptacle (9); wherein the plane plates (1, 33) along an axial direction (5) are capable of being disposed on top of one another such that the respectively at least one guiding face (7, 31) of each plane plate (1, 33) is disposed so as to be coaxial with the respectively other at least one guiding face (7, 31); wherein at least the first plane plate (1) is a plane plate (1) as claimed in one of the preceding claims; wherein the plane plates (1, 33) are capable of being disposed so as to be at least partially mutually overlapping along the axial direction (5) and along the radial direction (11).

11. Pressing tool (2) as claimed in claim 10, wherein the plane plates (1, 33) for contacting two guide columns (8, 37) that are common to the plane plates (1, 33) have in each case at least two at least partially cylindrical guiding faces (7, 31, 35); wherein the first plane plate (1) has a first at least partially cylindrical guiding face (7) having a first lower end (28), and the second plane plate (33) has a third at least partially cylindrical guiding face (35) having a third lower end (36), wherein the first plane plate (1) in relation to the axial direction (5) is capable of being disposed above the second plane plate (33), and the plane plates (1, 33) herein are capable of being mutually disposed such that the first guiding face (7) contacts a first guide column (8) of the common guide columns (8, 37), and the third guiding face (35) contacts a second guide column (37) of the common guide columns (8, 37); wherein the first lower end (28) in relation to the axial direction (5) herein is disposed below the third lower end (36).

12. Use of a plane plate (1) in a pressing tool (2) of a press (3) for producing a green compact; wherein the plane plate (1) for activating a punch (6) of the press (3) by way of at least one lifting cylinder (4) is displaceable along an axial direction (5); wherein the plane plate (1) has a link (34) to the at least one lifting cylinder (4), at least one at least partially cylindrical guiding face (7, 31) which for contacting a guide column (8, 37) is parallel with the axial direction (5), and a centrally disposed receptacle (9) for contacting the punch (6) or a punch holder of the press (3); wherein the plane plate (1) at least in a first cross section (10), the first cross section (10) running parallel to the axial direction (5) and along a radial direction (11), that runs so as to be perpendicular to the axial direction (5), through the link (34) and the receptacle (9), between the link (34) and the receptacle (9) has at least a first region (12) having a wall thickness (13), **characterized in that** the wall thickness (13) in the first region (12) at least between the link (34) and the minimum (42) varies continuously and the wall thickness (13) in the first region (12) and so as to be spaced apart from the receptacle (9) as well as from the link (34) has at least a minimum (42).

## Revendications

1. Plaque de niveau (1) pour un outil de presse (2) d'une presse (3) ; la plaque de niveau (1) pouvant être déplacée le long d'une direction axiale (5) par l'intermédiaire d'au moins un cylindre de levage (4) pour l'actionnement d'un poinçon (6) de la presse (3) ; la plaque de niveau (1) présentant une connexion (34) pour l'au moins un cylindre de levage (4), au moins une surface de guidage (7, 31) au moins partiellement cylindrique parallèle à la direction axiale (5) pour la mise en contact d'une colonne de guidage (8, 37) et un logement (9) disposé centralement pour la mise en contact du poinçon (6) ou du support de poinçon de la presse (3) ; la plaque de niveau (1) présentant au moins une première région (12) entre la connexion (34) et le logement (9) dotée d'une épaisseur de paroi (13) dans au moins une première section transversale (10) qui s'étend parallèlement à la direction axiale (5) et le long d'une direction radiale (11) s'étendant perpendiculairement à la direction axiale (5) à travers la connexion (34) et le logement (9), **caractérisée en ce que** l'épaisseur de paroi (13) dans la première région (12) varie de manière continue au moins entre le logement (9) et le minimum (42) et l'épaisseur de paroi (13) présente au moins un minimum (42) dans la première région (12) et de manière espacée du logement (9) ainsi que de la connexion (34).

2. Plaque de niveau (1) selon la revendication 1, le minimum (42) étant réalisé sous forme d'ouverture qui relie l'un à l'autre un côté supérieur (39) orienté dans une première direction axiale (38) et un côté inférieur (41) orienté dans une deuxième direction axiale (40) opposée à la première direction axiale (38) de la plaque de niveau (1).

3. Plaque de niveau (1) selon l'une des revendications précédentes, au moins la première région (12) présentant dans la première section transversale (10) une première ligne centrale (21) de l'épaisseur de paroi (13), la première ligne centrale (21) s'étendant suivant un premier angle (22) d'au moins 10 degrés angulaires par rapport à la direction radiale (11).

4. Plaque de niveau (1) selon l'une des revendications précédentes, la plaque de niveau (1) présentant un côté supérieur (39) orienté dans une première direction axiale (38) et un côté inférieur (41) orienté dans une deuxième direction axiale (40) opposée à la première direction axiale (38) ; l'au moins une surface de guidage (7, 31) présentant une extrémité supérieure (43, 45) au niveau du côté supérieur (39) ; la connexion (34, 46) présentant une surface de connexion supérieure (44) au niveau du côté supérieur (39) ; l'extrémité supérieure (43, 45) et la surface de connexion supérieure (44) étant disposées à des hauteurs (29) différentes l'une de l'autre par rapport à la direction axiale (5) et donc de manière espacée l'une de l'autre dans la direction axiale (5).

5. Plaque de niveau (1) selon la revendication 4, la plaque de niveau (1) présentant au moins deux surfaces de guidage (7, 31) au moins partiellement cylindriques pour la mise en contact d'une colonne de guidage (8, 37) respectivement, une première surface de guidage (7) au moins partiellement cylindrique présentant une première extrémité inférieure (28) et une première extrémité supérieure (43) et une deuxième surface de guidage (31) au moins partiellement cylindrique présentant une deuxième extrémité inférieure (32) et une deuxième extrémité supérieure (45), la première extrémité inférieure (28) étant disposée à une hauteur (29) différente en dessous de la deuxième extrémité inférieure (32) par rapport à la direction axiale (5) et la première extrémité supérieure (43) étant disposée à une hauteur (29) différente en dessous de la deuxième extrémité supérieure (45) par rapport à la direction axiale (5).

6. Plaque de niveau (1) selon la revendication 5, la surface de connexion supérieure (44) étant disposée à une hauteur (29) différente par rapport à la direction axiale (5) entre la première extrémité supérieure (43) et la deuxième extrémité supérieure (45) le long de la direction axiale (5).

7. Plaque de niveau (1) selon la revendication 6, la surface de connexion supérieure (44) étant disposée à une hauteur (29) différente par rapport à la direction axiale (5) entre la première extrémité supérieure (43) et la deuxième extrémité inférieure (32) le long de la direction axiale (5).

8. Plaque de niveau (1) selon l'une des revendications précédentes, la plaque de niveau (1) pouvant être déplacée le long d'une direction axiale (5) par l'intermédiaire d'au moins deux cylindres de levage (4, 47) pour l'actionnement du poinçon (6) de la presse (3) ; la plaque de niveau (1) présentant une première connexion (34) pour un premier cylindre de levage (4) et une deuxième connexion (46) pour un deuxième cylindre de levage (47) ; les connexions (34, 46) étant disposées à une hauteur (29) commune par rapport à la direction axiale (5).

9. Plaque de niveau (1) selon l'une des revendications précédentes, la plaque de niveau (1) pouvant être déplacée le long d'une direction axiale (5) par l'intermédiaire d'au moins deux cylindres de levage (4, 47) pour l'actionnement du poinçon (6) de la presse (3) ; la plaque de niveau (1) présentant une première connexion (34) pour un premier cylindre de levage (4) et une deuxième connexion (46) pour un deuxième cylindre de levage (47) ; les connexions (34, 46) étant disposées à des hauteurs (29) différentes l'une de l'autre par rapport à la direction axiale (5).

10. Outil de presse (2) pour une presse (3), comprenant au moins une première plaque de niveau (1) et une deuxième plaque de niveau (33), au moins la première plaque de niveau (1) pouvant être déplacée le long d'une direction axiale (5) par l'intermédiaire d'au moins un cylindre de levage (4) pour l'actionnement d'un poinçon (6) de la presse (3) ; au moins la première plaque de niveau (1) présentant une connexion (34) pour l'au moins un cylindre de levage (4), chaque plaque de niveau (1, 33) présentant respectivement au moins une surface de guidage (7, 31) au moins partiellement cylindrique pour la mise en contact d'une colonne de guidage (8, 37) commune aux plaques de niveau (1) et respectivement un logement (9) disposé centralement pour la mise en contact du poinçon (6) ou d'un support de poinçon de la presse (3) ; les plaques de niveau (1, 33) pouvant être disposées les unes au-dessus des autres le long d'une direction axiale (5), de sorte que la ou les surfaces de guidage (7, 31) respectives de chaque plaque de niveau (1, 33) soient disposées coaxialement les unes par rapport aux autres ; au moins la première plaque de niveau (1) étant une plaque de niveau (1) selon l'une des revendications précédentes ; les plaques de niveau (1, 33) pouvant être disposées de manière à se chevaucher au moins partiellement les unes les autres le long de la direction axiale (5) et le long de la direction radiale (11).

11. Outil de presse (2) selon la revendication 10, les plaques de niveau (1, 33) présentant respectivement au moins deux surfaces de guidage (7, 31, 35) au moins partiellement cylindriques pour la mise en contact de deux colonnes de guidage (8, 37) communes aux plaques de niveau (1,33) ; la première plaque de niveau (1) présentant une première surface de guidage (7) au moins partiellement cylindrique dotée d'une première extrémité inférieure (28) et la deuxième plaque de niveau (33) présentant une troisième surface de guidage (35) au moins partiellement cylindrique dotée d'une troisième extrémité inférieure (36), la première plaque de niveau (1) pouvant être disposée au-dessus de la deuxième plaque de niveau (33) par rapport à la direction axiale (5) et les plaques de niveau (1, 33) pouvant en l'occurrence être disposées les unes par rapport aux autres de telle sorte que la première surface de guidage (7) soit mise en contact avec une première colonne de guidage (8) des colonnes de guidage (8, 37) communes et que la troisième surface de guidage (35) soit mise en contact avec une deuxième colonne de guidage (37) des colonnes de guidage (8, 37) communes ; en l'occurrence la première extrémité inférieure (28) étant disposée en dessous de la troisième extrémité inférieure (36) par rapport à la direction axiale (5).

12. Utilisation d'une plaque de niveau (1) dans un outil de presse (2) d'une presse (3) pour la fabrication d'une ébauche de compact ; la plaque de niveau (1) pouvant être déplacée le long d'une direction axiale (5) par l'intermédiaire d'au moins un cylindre de levage (4) pour l'actionnement d'un poinçon (6) de la presse (3) ; la plaque de niveau (1) présentant une connexion (34) pour l'au moins un cylindre de levage (4), au moins une surface de guidage (7, 31) au moins partiellement cylindrique parallèle à la direction axiale (5) pour la mise en contact d'une colonne de guidage (8, 37) et un logement (9) disposé centralement pour la mise en contact du poinçon (6) ou du support de poinçon de la presse (3) ; la plaque de niveau (1) présentant au moins une première région (12) entre la connexion (34) et le logement (9) dotée d'une épaisseur de paroi (13) dans au moins une première section transversale (10) qui s'étend parallèlement à la direction axiale (5) et le long d'une direction radiale (11) s'étendant perpendiculairement à la direction axiale (5) à travers la connexion (34) et le logement (9), **caractérisée en ce que** l'épaisseur de paroi (13) dans la première région (12) varie de manière continue au moins entre le logement (9) et le minimum (42) et l'épaisseur de paroi (13) présente au moins un minimum (42) dans la première région (12) et de manière espacée du logement (9) ainsi que de la connexion (34).
